# EUROPEAN PATENT SPECIFICATION

(11) **EP 3 561 737 B1**
(45) Date of publication and mention of the grant of the patent: **01.03.2023**
(21) Application number: 17891227.5
(22) Date of filing: 07.12.2017
(51) Int. Cl.: G06N 3/063

(54) **CALCULATING DEVICE AND CALCULATION METHOD FOR NEURAL NETWORK CALCULATION**
BERECHNUNGSVORRICHTUNG UND BERECHNUNGSVERFAHREN ZUR BERECHNUNG MIT NEURONALEM NETZ
DISPOSITIF DE CALCUL ET PROCÉDÉ DE CALCUL POUR CALCUL DE RÉSEAU NEURONAL

(30) Priority: 13.01.2017 CN 201710025196
(43) Date of publication of application: 30.10.2019
(73) Proprietor: Huawei Technologies Co., Ltd., Longgang District Shenzhen, Guangdong 518129 (CN)
(72) Inventor: LIU, Wulong, Shenzhen Guangdong 518129 (CN); YAO, Jun, Shenzhen Guangdong 518129 (CN); WANG, Yu, Beijing 100084 (CN)
(74) Representative: Gill Jennings & Every LLP
(86) International application number: PCT/CN2017/115038
(87) International publication number: WO 2018/130029

(56) References cited:
- CN-A- 104 145 281
- CN-A- 106 203 621
- CN-A- 106 228 240
- US-A1- 2013 097 212
- US-A1- 2016 196 488
- JOHN A ROBINSON: "Efficient Gaussian filtering using Cascaded Prefix Sums", IMAGE PROCESSING (ICIP), 2012 19TH IEEE INTERNATIONAL CONFERENCE ON, IEEE, 30 September 2012 (2012-09-30), pages 117-120, XP032333127, DOI: 10.1109/ICIP.2012.6466809 ISBN: 978-1-4673-2534-9
- Magnus Halvorsen: "Hardware Acceleration of Convolutional Neural Networks", , 30 June 2015 (2015-06-30), XP055387440, Retrieved from the Internet: URL:https://brage.bibsys.no/xmlui/bitstrea m/handle/11250/2353511/13656_FULLTEXT.pdf? sequence=1&isAllowed=y [retrieved on 2017-07-03]
- WANG YU ET AL: "Low power Convolutional Neural Networks on a chip", 2016 IEEE INTERNATIONAL SYMPOSIUM ON CIRCUITS AND SYSTEMS (ISCAS), IEEE, 22 May 2016 (2016-05-22), pages 129-132, XP032941496, DOI: 10.1109/ISCAS.2016.7527187 [retrieved on 2016-07-29]

## Description

### TECHNICAL FIELD

This application relates to the field of data processing, and more specifically, to a computing device and a computation method for neural network computation.

### BACKGROUND

A neural network (such as a deep neural network) is widely applied to fields such as computer vision, natural language processing, and big data mining. Neural network computation has the following two typical characteristics:

### (1) Compute-intensive

Operations performed by the neural network are mainly multidimensional matrix multiplication, and computation complexity of the multidimensional matrix multiplication is usually O (N³). For example, the 22-layer GoogLeNet usually needs a computation amount of 6 GFLOPS (Floating-point Operations Per Second, floating-point operations per second).

### (2) Memory-intensive

A training process of the neural network usually needs massive volumes of data, and the training process needs a large amount of storage space to buffer connection weights of neurons and intermediate data computed by each neural network layer.

In the prior art, there are various computing devices dedicated to neural network computation, such as a logical operation circuit-based computing device or a crossbar-based computing device. However, all the prior-art computing devices for neural network computation need a large quantity of storage resources to store intermediate data computed by each neural network layer. Consequently, there is a relatively high requirement for a storage capacity of the computing devices and storage overheads are high.

The publication, "Efficient Gaussian Filtering Using Cascaded Prefix Sums", by Robinson, J. A., Image Processing (ICIP), 2012 19th IEEE International Conference, 30 December 2012, pages 117-120, discloses a method for multidimensional Gaussian filtering using a one-pass cascade of overlapping local average windows driven by prefix sums.

US 2013/097212 A1 discloses approaches to multidimensional filtering with a reduced number of memory read and writes.

The publication, "Hardware Acceleration of Convolutional Neural Networks" by Halvorsen, M., retrieved from the Internet on 20 July 2020, at: https://www.semanticscholar.org/paper/Hardware-Acceleration-of-Convolutional-Neural-Hal vorsen/127f1f3ea84e88be898e51f7fc29c5b58d2f432a, discusses the use of specific hardware accelerators to compute computational-insensitive networks in a fast and power efficient way.

The publication, "Low Power Convolutional Neural Networks on a Chip", by Wang, Y. et al., 2016 IEEE International Symposium on Circuits and Systems, 22 May 2016, pages 129-132, discusses an on-chip convolutional neural network implementation for low-power embedded systems.

### SUMMARY

This application provides a computing device and a computation method for neural network computation, to reduce storage overheads of the computing device for neural network computation.

According to a first aspect, a computing device for neural network computation is provided according to appended claim 1.

In the prior art, a (K+1)^{th} neural network layer starts computation only after a K^{th} neural network layer completes computation. Therefore, a computing device needs to store all computation results of the K^{th} neural network layer. Consequently, storage overheads of the computing device are high. In this solution, before the K^{th} neural network layer completes all first operations on an input matrix, if the first storage unit stores sufficient data elements required for performing one second operation, the second computing unit may be controlled to perform one second operation. In other words, in this solution, the (K+1)^{th} neural network layer does not need to perform computation until the K^{th} neural network layer completes computation. Once the first storage unit stores the sufficient data elements required for performing one second operation, the (K+1)^{th} neural network layer may be controlled, by using an inter-layer pipeline control mechanism, to perform one second operation. In this way, neural network computation efficiency can be improved.

Further, in this solution, before the K^{th} neural network layer completes computation, the (K+1)^{th} neural network layer is triggered to perform computation. This means that the first storage unit does not need to simultaneously store all intermediate data computed by the K^{th} neural network layer, but needs to store only a part of intermediate data that is between the K^{th} neural network layer and the (K+1)^{th} neural network layer. Therefore, data storage overheads can be reduced.

With reference to the first aspect, in some implementations of the first aspect, the computing device includes the first storage unit, the first storage unit includes a first line buffer, the first line buffer includes N registers, the N registers in the first line buffer sequentially store elements of a third matrix in row-major order or column-major order, and the third matrix is a matrix that is obtained after zero adding is performed on the second matrix for performing the second operation on the second matrix, where N=(h-1)×(W+p)+w, h represents a quantity of rows of a kernel corresponding to the second operation, w represents a quantity of columns of the kernel corresponding to the second operation, W represents a quantity of columns of the second matrix, p represents a quantity of rows or a quantity of columns of elements 0 that need to be added to the second matrix to perform the second operation on the second matrix, and h, w, p, W, and N are all positive integers not less than 1.

By setting N=(h-1)×(W+p)+w, the first line buffer is allowed to buffer data between neural network layers at minimum storage costs.

With reference to the first aspect, in some implementations of the first aspect, the second computing unit is a crossbar, X target registers of the N registers are directly connected to X rows of the second computing unit respectively, and the X target registers are a [1+k×(W+p)]^{th} register to a [w+k×(W+p)]^{th} register of the N registers, where a value of k is a positive integer ranging from 0 to h-1, and X=h×w; and the control unit is specifically configured to: store the i^{th} data element of the second matrix into the first line buffer; and if data elements currently stored in the X target registers are sufficient for performing one second operation, control the second computing unit to operate, so as to perform one second operation on the data elements stored in the X target registers.

The X target registers are directly connected to the X rows of the second computing unit respectively, and to-be-computed data may be input to the second computing unit without a complex addressing operation, thereby improving neural network computation efficiency.

The first line buffer is controlled to read the element 0 in an idle clock cycle between the i^{th} first operation and the (i+1)^{th} first operation. Therefore, a waste of clock cycles is reduced, and neural network computation efficiency is improved.

With reference to the first aspect, in some implementations of the first aspect, the control unit is specifically configured to: control, in an n^{th} clock cycle, the first computing unit to perform the i^{th} first operation on the first matrix, to obtain the i^{th} data element of the second matrix, where the i^{th} data element of the second matrix is located in a last column of the second matrix, and an (i+1)^{th} data element of the second matrix is located at a starting location of a row next to a row in which the i^{th} data element is located; or the i^{th} data element of the second matrix is located in a last row of the second matrix, and an (i+1)^{th} data element of the second matrix is located at a starting location of a column next to a column in which the i^{th} data element is located; and the control unit is further configured to: control, in an (n+t)^{th} clock cycle, the first computing unit to perform an (i+1)^{th} first operation of the M first operations on the first matrix, where t is a positive integer greater than 1; and control, in at least one clock cycle between the (n+1)^{th} clock cycle and the (n+t)^{th} clock cycle, the first line buffer to store an element 0.

The first line buffer is controlled to read the element 0 in an idle clock cycle between the i^{th} first operation and the (i+1)^{th} first operation. Therefore, a waste of clock cycles is reduced, and neural network computation efficiency is improved.

With reference to the first aspect, in some implementations of the first aspect, t=(s-1)×(W+p)+(w-1), and the control unit is specifically configured to: control, in the (n+1)^{th} clock cycle to the (n+t)^{th} clock cycle, the first line buffer to sequentially store (s-1)×(W+p)+(w-1) elements 0, where s represents a sliding step of the first operation.

The first line buffer is controlled to read one element 0 in each idle clock cycle between the i^{th} first operation and the (i+1)^{th} first operation. Therefore, a waste of clock cycles is avoided, and neural network computation efficiency is optimized.

A computing unit in a crossbar form is capable of converting a digital operation into an analog operation, thereby improving neural network computation efficiency.

According to a second aspect, a computation method for neural network computation is provided according to appended claim 4.

In the prior art, a (K+1)^{th} neural network layer starts computation only after a K^{th} neural network layer completes computation. Therefore, a computing device needs to store all computation results of the K^{th} neural network layer. Consequently, storage overheads of the computing device are high. In this solution, before the K^{th} neural network layer completes all first operations on an input matrix, if the first storage unit stores sufficient data elements required for performing one second operation, the second computing unit may be controlled to perform one second operation. In other words, in this solution, the (K+1)^{th} neural network layer does not need to perform computation until the K^{th} neural network layer completes computation. Once the first storage unit stores the sufficient data elements required for performing one second operation, the (K+1)^{th} neural network layer may be controlled, by using an inter-layer pipeline control mechanism, to perform one second operation. In this way, neural network computation efficiency can be improved.

Further, in this solution, before the K^{th} neural network layer completes computation, the (K+1)^{th} neural network layer is triggered to perform computation. This means that the first storage unit does not need to simultaneously store all intermediate data computed by the K^{th} neural network layer, but needs to store only a part of intermediate data that is between the K^{th} neural network layer and the (K+1)^{th} neural network layer. Therefore, data storage overheads can be reduced.

With reference to the second aspect, in some implementations of the second aspect, the computing device includes the first storage unit, the first storage unit includes a first line buffer, the first line buffer includes N registers, the N registers in the first line buffer sequentially store elements of a third matrix in row-major order or column-major order, and the third matrix is a matrix that is obtained after zero adding is performed on the second matrix for performing the second operation on the second matrix, where N=(h-1)×(W+p)+w, h represents a quantity of rows of a kernel corresponding to the second operation, w represents a quantity of columns of the kernel corresponding to the second operation, W represents a quantity of columns of the second matrix, p represents a quantity of rows or a quantity of columns of elements 0 that need to be added to the second matrix to perform the second operation on the second matrix, and h, w, p, W, and N are all positive integers not less than 1.

By setting N=(h-1)×(W+p)+w, the first line buffer is allowed to buffer data between neural network layers at minimum storage costs.

With reference to the second aspect, in some implementations of the second aspect, the second computing unit is a crossbar, X target registers of the N registers are directly connected to X rows of the second computing unit respectively, and the X target registers are a [1+k×(W+p)]^{th} register to a [w+k×(W+p)]^{th} register of the N registers, where a value of k is a positive integer ranging from 0 to h-1, and X=h×w; the storing the i^{th} data element of the second matrix into a first storage unit includes: storing the i^{th} data element of the second matrix into the first line buffer; and the controlling, if data elements currently stored in the first storage unit are sufficient for performing one second operation, the second computing unit to perform one second operation includes: if data elements currently stored in the X target registers are sufficient for performing one second operation, controlling the second computing unit to operate, so as to perform one second operation on the data elements stored in the X target registers.

The X target registers are directly connected to the X rows of the second computing unit respectively, and to-be-computed data may be input to the second computing unit without a complex addressing operation, thereby improving neural network computation efficiency.

With reference to the second aspect, in some implementations of the second aspect, the controlling the first computing unit to perform an i^{th} first operation of the M first operations on the first matrix includes: controlling, in an n^{th} clock cycle, the first computing unit to perform the i^{th} first operation on the first matrix, to obtain the i^{th} data element of the second matrix, where the i^{th} data element of the second matrix is located in a last column of the second matrix, and an (i+1)^{th} data element of the second matrix is located at a starting location of a row next to a row in which the i^{th} data element is located; or the i^{th} data element of the second matrix is located in a last row of the second matrix, and an (i+1)^{th} data element of the second matrix is located at a starting location of a column next to a column in which the i^{th} data element is located; and the computation method further includes: controlling, in an (n+t)^{th} clock cycle, the first computing unit to perform an (i+1)^{th} first operation of the M first operations on the first matrix, where t is a positive integer greater than 1; and controlling, in at least one clock cycle between the (n+1)^{th} clock cycle and the (n+t)^{th} clock cycle, the first line buffer to store an element 0.

The first line buffer is controlled to read the element 0 in an idle clock cycle between the i^{th} first operation and the (i+1)^{th} first operation. Therefore, a waste of clock cycles is reduced, and neural network computation efficiency is improved.

The first line buffer is controlled to read the element 0 in an idle clock cycle between the i^{th} first operation and the (i+1)^{th} first operation. Therefore, a waste of clock cycles is reduced, and neural network computation efficiency is improved.

With reference to the second aspect, in some implementations of the second aspect, t=(s-1)×(W+p)+(w-1), and the controlling, in at least one clock cycle between the (n+1)^{th} clock cycle and the (n+t)^{th} clock cycle, the first line buffer to store an element 0 includes: controlling, in the (n+1)^{th} clock cycle to the (n+t)^{th} clock cycle, the first line buffer to sequentially store (s-1)×(W+p)+(w-1) elements 0, where s represents a sliding step of the first operation.

The first line buffer is controlled to read the element 0 in an idle clock cycle between the i^{th} first operation and the (i+1)^{th} first operation. Therefore, a waste of clock cycles is reduced, and neural network computation efficiency is improved.

A computing unit in a crossbar form is capable of converting a digital operation into an analog operation, thereby improving neural network computation efficiency.

In some foregoing aspects or some implementations of some aspects, the second operation is a convolution operation.

In some foregoing aspects or some implementations of some aspects, the first computing unit is a crossbar.

In some foregoing aspects or some implementations of some aspects, the second computing unit is a crossbar.

In some foregoing aspects or some implementations of some aspects, the size of the core of the first operation is the same as that of the core of the second operation.

According to the technical solutions provided in this application, data storage overheads can be reduced, and neural network computation efficiency can be improved.

The present invention is defined in the appended independent claims to which reference should be made. Advantageous features are set out in the appended dependent claims.

### BRIEF DESCRIPTION OF DRAWINGS

FIG. 1 is a schematic diagram of a computation process of a convolution operation;
FIG. 2 is a schematic structural diagram of a crossbar;
FIG. 3 is a schematic structural diagram of a computing device according to an embodiment of this application;
FIG. 4 is a schematic structural diagram of a line buffer according to an embodiment of this application;
FIG. 5 is a comparison diagram of a line buffer storage status and a convolution operation process according to an embodiment of this application;
FIG. 6 is a schematic structural diagram of a computing device according to another embodiment of this application;
FIG. 7 is a schematic structural diagram of a computing device according to still another embodiment of this application;
FIG. 8 is a schematic diagram of one convolution operation according to an embodiment of this application;
FIG. 9 is a schematic diagram of one convolution operation according to another embodiment of this application; and
FIG. 10 is a schematic flowchart of a computation method for neural network computation according to an embodiment of this application.

### DESCRIPTION OF EMBODIMENTS

For ease of understanding, a neural network and a computing device for neural network computation are first described in detail.

The neural network usually includes a plurality of neural network layers, and the neural network layers may implement different operations. Common neural network layers include a convolution layer, a pooling layer, a fully-connected layer, and the like. There are a plurality of combination manners of adjacent neural network layers, and relatively common combination manners include a convolution layer-convolution layer manner and a convolution layer-pooling layer-convolution layer manner. The convolution layer is mainly used to perform a convolution operation on an input matrix, and the pooling layer is mainly used to perform a pooling operation on an input matrix. Both the convolution operation and the pooling operation may correspond to one kernel, and a kernel corresponding to the convolution operation may be referred to as a convolution kernel. The following describes the convolution operation and the pooling operation in detail.

The convolution operation is mainly used in the field of image processing, and in the field of image processing, an input matrix may also be referred to as a feature map. The convolution operation corresponds to one convolution kernel. The convolution kernel may also be referred to as a weight matrix, and each element in the weight matrix is one weight value. In a convolution process, the input matrix is divided by a sliding window into many sub-matrices whose sizes are the same as that of the weight matrix, matrix multiplication is performed on each sub-matrix and the weight matrix, and an obtained result is a weighted average of data elements of each sub-matrix.

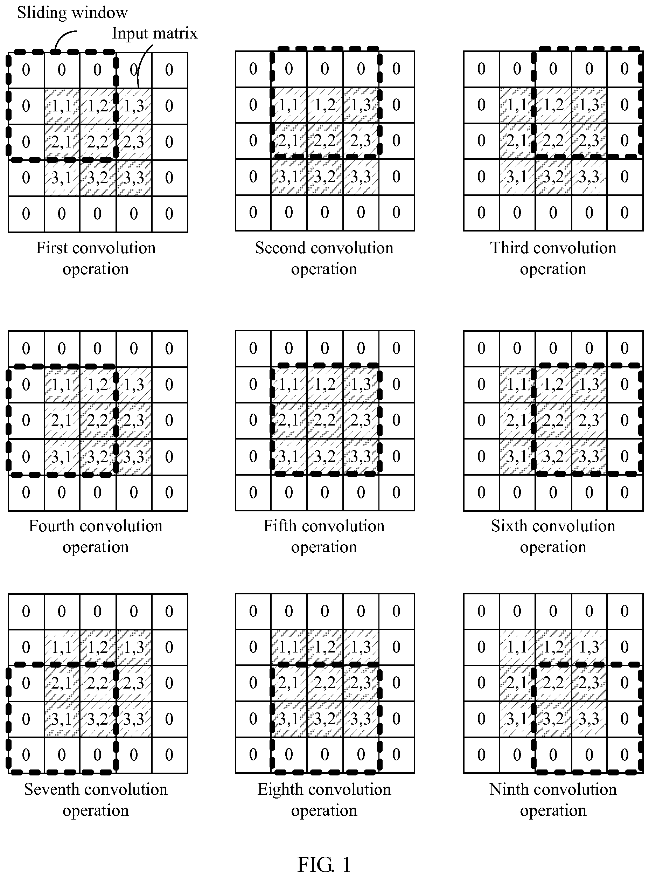

For ease of understanding, with reference to FIG. 1, the following describes a convolution operation process by using an example.

As shown in FIG. 1, an input matrix is a 3×3 matrix. To ensure dimension consistency between the input matrix and an output matrix, before a convolution operation is performed on the input matrix, two rows and two columns of elements 0 need to be added around edges of the input matrix, to convert the input matrix into a 5×5 matrix. A size of a sliding window represents a size of a convolution kernel. In FIG. 1, an example in which the convolution kernel is a 3×3 weight matrix is used for description. The sliding window may start sliding from an upper left location of the input matrix based on a sliding step s. In FIG. 1, an example in which the sliding step s=1 is used for description. The output matrix may be obtained by performing nine convolution operations in a manner shown in FIG. 1. An element (1,1) of the output matrix is obtained by a first convolution operation, an element (1,2) of the output matrix is obtained by a second convolution operation, and so on.

It should be understood that the convolution operation usually requires dimension consistency between the input matrix and the output matrix. However, this is not limited in the embodiments of this application, and dimension consistency between the input matrix and the output matrix may not be required. If the convolution operation does not require dimension consistency between the input matrix and the output matrix, before the convolution operation is performed on the input matrix, zero adding may not be performed.

It should be further understood that in the foregoing description, an example in which the sliding step s of the convolution operation is 1 is used for description. However, this is not limited in the embodiments of this application, and the sliding step of the convolution operation may alternatively be greater than 1.

A pooling operation is usually used to reduce dimensions of an input matrix, that is, used to perform down-sampling on the input matrix. The pooling operation is similar to the convolution operation and is also computation performed on the input matrix based on one kernel. Therefore, there is also a sliding window, and a sliding step of the pooling operation is usually greater than 1 (or may be equal to 1). There are a plurality of types of pooling operations, such as average pooling and maximum pooling. In the average pooling, all elements in a sliding window are averaged. In the maximum pooling, a maximum value among all elements in a sliding window is computed. A pooling process is approximately the same as a convolution process but a difference is that operation manners of data elements in the sliding windows are different. Details are not described herein again.

It is mentioned above that the neural network usually has a plurality of neural network layers. A computing device for neural network computation (for example, the computing device may be a neural network accelerator) includes computing units corresponding to the neural network layers, and the computing unit corresponding to each neural network layer may be configured to perform operations of the neural network layer. It should be noted that the computing units corresponding to the neural network layers may be integrated together or may be separated from each other. This is not specifically limited in the embodiments of this application.

The computing unit may be implemented by using a logical operation circuit or a crossbar. The logical operation circuit may be, for example, a logical operation circuit based on a complementary metal-oxide-semiconductor transistor (complementary metal-oxide-semiconductor transistor, CMOS).

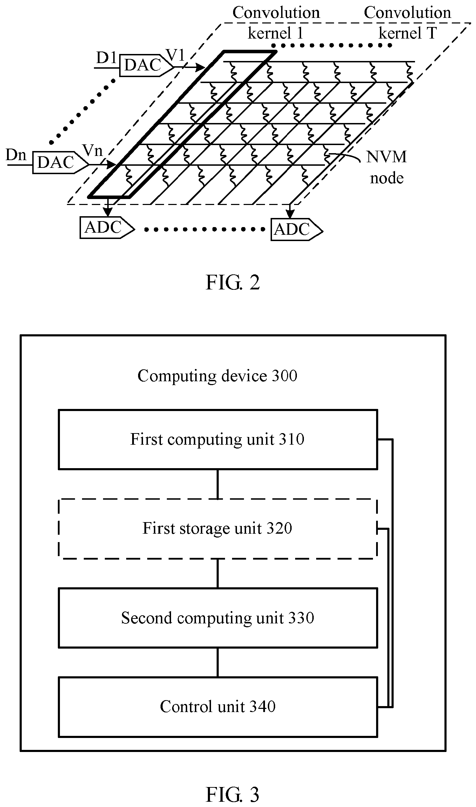

A computing unit in a crossbar form is a type of computing unit that recently starts being widely applied. When a crossbar is used to perform a neural network operation, a connection weight of a neuron may be stored in a non-volatile memory (Non-Volatile Memory, NVM) of the crossbar. In a case of power failure, the NVM is still capable of effectively storing data; therefore, storage overheads of the computing device can be reduced. The following describes the crossbar in detail with reference to FIG. 2.

As shown in FIG. 2, a crossbar (crossbar or xbar) is in a row-column cross structure. Each cross node is provided with an NVM (the cross node is referred to as an NVM node below), configured to store and compute data. No specific limitation is imposed on a type of the NVM in the NVM node in the embodiments of this application. For example, the NVM may be a resistive random access memory (resistive random access memory, RRAM), a ferroelectric random access memory (ferroelectric random access memory, FeRAM), a magnetic random access memory (magnetic random access memory, MRAM), or a phase-change random access memory (Phase-change Random Access Memory, PRAM).

Computation of a neural network layer is mainly vector-matrix multiplication or matrix-matrix multiplication. Therefore, the crossbar is very suitable for neural network computation. The following describes a basic working principle of the crossbar in neural network computation in detail.

First, each NVM node in the crossbar is initialized, so that the crossbar stores a connection weight of a neuron. For example, the crossbar is used to perform a convolution operation of a convolution layer. As shown in FIG. 2, it is assumed that the convolution layer performs T types of convolution operations. Each type of convolution operation corresponds to one two-dimensional convolution kernel (a convolution kernel is a weight matrix and therefore is two-dimensional). Therefore, vector expansion may be first performed on each two-dimensional convolution kernel, to obtain a one-dimensional convolution kernel vector. Then the convolution kernel vectors are mapped to T columns of the crossbar, so that each column of NVM nodes stores one convolution kernel vector. For example, the two-dimensional convolution kernel is a 3×3 convolution kernel. First, vector expansion may be performed on the 3×3 convolution kernel, to obtain a one-dimensional convolution kernel vector including nine data elements, and then, the nine data elements of the one-dimensional convolution kernel vector are respectively stored in nine NVM nodes in a column of the crossbar. The data element stored in each NVM node may be represented by a resistance value (or referred to as an electrical conductivity value) of the NVM node.

One convolution operation is performed on each sub-matrix of an input matrix. Before the convolution operation is performed on each sub-matrix, the sub-matrix may be first converted into a to-be-computed vector. As shown in FIG. 2, assuming that a quantity of dimensions of the to-be-computed vector is n, n elements in the to-be-computed vector are respectively represented by using digital signals D1 to Dn. Then, the digital signals D1 to Dn are converted into analog signals V1 to Vn by using a digital to analog converter (Digital to Analog Converter, DAC). In this case, the n elements in the to-be-computed vector are respectively represented by using the analog signals V1 to Vn. Next, the analog signals V1 to Vn are respectively input into n rows of the crossbar. An electrical conductivity value of an NVM node in each column of the crossbar represents a weight value stored in the NVM node. Therefore, after the analog signals V1 to Vn function in each column of corresponding NVM nodes, a current value output by each NVM node represents a product of a weight value stored in the NVM node and a data element represented by an analog signal received by the NVM node. Because each column of the crossbar corresponds to one convolution kernel vector, a total output current of each column represents an operation result of a matrix product of a convolution kernel corresponding to the column and a sub-matrix corresponding to the to-be-computed vector. Then, as shown in FIG. 2, the operation result of the matrix product is converted from an analog parameter into a digital parameter by using an analog to digital converter (Analog to Digital Converter, ADC) that is at the end of each column of the crossbar, and the digital parameter is output.

Based on the foregoing working principle, it can be learned that the crossbar converts matrix-matrix multiplication into a multiplication operation of two vectors (a to-be-computed vector and a convolution kernel vector) and is capable of fast obtaining a computation result based on analog computation, and therefore is very suitable to process operations such as vector-matrix multiplication or matrix-matrix multiplication. Because 90% or more operations in a neural network are all operations of this type, the crossbar is very suitable to be used as a computing unit in the neural network, in particular, to be used to process a convolution operation.

In addition to the computing unit, the computing device for neural network computation further includes a storage unit, configured to store intermediate data or connection weights of neurons of the neural network layers (if the computing unit is a crossbar, the connection weight of the neuron may be stored in an NVM node of the crossbar). A storage unit of a conventional computing device for neural network computation is usually implemented by using a dynamic random access memory (dynamic random access memory, DRAM), or may be implemented by using an enhanced dynamic random access memory (enhanced dynamic random access memory, eDRAM).

It is mentioned above that the neural network is characterized by being compute-intensive and memory-intensive, and therefore a large quantity of storage resources are required to store intermediate data obtained through operations of the neural network layers. Consequently, storage overheads are high.

To resolve the foregoing problem, with reference to FIG. 3, the following describes a computing device for neural network computation according to an embodiment of this application in detail.

FIG. 3 is a schematic structural diagram of a computing device for neural network computation according to an embodiment of this application. A neural network includes a K^{th} neural network layer and a (K+1)^{th} neural network layer, an operation performed by the K^{th} neural network layer includes a first operation, and K is a positive integer not less than 1.

The computing device 300 includes a first computing unit 310, a second computing unit 330, and a control unit 340.

The first computing unit 310 is configured to perform the first operation on an input first matrix M times, to obtain a second matrix, where M is a positive integer not less than 1.

The second computing unit 330 is configured to perform a second operation on the input second matrix.

The control unit 340 is configured to:
control the first computing unit 310 to perform an i^{th} first operation of the M first operations on the first matrix, to obtain an i^{th} data element of the second matrix, where 1 <i<M;
store the i^{th} data element of the second matrix into a first storage unit 320; and
control, if data elements currently stored in the first storage unit 320 are sufficient for performing one second operation, the second computing unit 330 to perform one second operation.

The first operation is a convolution operation and the second operation is a convolution operation or a pooling operation, or the first operation is a pooling operation and the second operation is a convolution operation.

In the prior art, a (K+1)^{th} neural network layer starts computation only after a K^{th} neural network layer completes computation. Therefore, a computing device needs to store all computation results of the K^{th} neural network layer. Consequently, storage overheads of the computing device are high. In this embodiment of this application, before the K^{th} neural network layer completes all first operations on an input matrix, if the first storage unit stores sufficient data elements required for performing one second operation, the second computing unit may be controlled to perform one second operation. In other words, in this embodiment of this application, the (K+1)^{th} neural network layer does not need to perform computation until the K^{th} neural network layer completes computation. Once the first storage unit stores the sufficient data elements required for performing one second operation, the (K+1)^{th} neural network layer may be controlled, by using an inter-layer pipeline control mechanism, to perform one second operation. In this way, neural network computation efficiency can be improved.

Further, in this embodiment of this application, before the K^{th} neural network layer completes computation, the (K+1)^{th} neural network layer is triggered to perform computation. This means that the first storage unit does not need to simultaneously store all intermediate data computed by the K^{th} neural network layer, but needs to store only a part of intermediate data that is between the K^{th} neural network layer and the (K+1)^{th} neural network layer. Therefore, data storage overheads can be reduced.

It is mentioned above that the first computing unit 310 is configured to perform the first operation on the input matrix M times. M represents a quantity of times that the first operation needs to be performed on the input matrix. A specific value of M is related to one or more of the following factors: a quantity of dimensions of the input matrix, a type of the first operation, a size of a sliding window corresponding to the first operation, a sliding step, and the like. This is not specifically limited in this embodiment of this application. For example, in FIG. 1, the input matrix is a 3×3 matrix, the size of the sliding window is 3×3, the sliding step is 1, and therefore M is 9.

It is mentioned above that the first storage unit 320 is configured to store an output matrix computed by the first computing unit 310. It should be understood that the output matrix is relative to the first computing unit 310, and the output matrix is actually an input matrix of the second computing unit 330.

No specific limitation is imposed on a type of the first storage unit 320 in this embodiment of this application. In some embodiments, the first storage unit 320 may be a DRAM. In some embodiments, the first storage unit 320 may be an eDRAM. In some embodiments, the first storage unit 320 may be a line buffer (line buffer, LB). In the following, an example in which the first storage unit 320 is an LB is used for detailed description. Details are not described herein again.

In some embodiments, the first storage unit 320 may be a part of the computing device 300. For example, the first storage unit 320 and a computing unit in the computing device 300 may be integrated into one chip, and are dedicated to neural network computation. In some other embodiments, the first storage unit 320 may be a memory located outside the computing device 300.

The computing device in this embodiment of this application may be a general computing device supporting neural network computation, or may be a dedicated computing device for neural network computation, for example, may be a neural network accelerator.

The control unit 340 in this embodiment of this application is mainly configured to implement control logic of the computing device 300, and the control unit 340 may be a separate control unit or may be combined by a plurality of separate subunits.

No specific limitation is imposed on a type of the first computing unit 310 in this embodiment of this application. For example, the first computing unit 310 may be implemented by using a crossbar, or may be implemented by using a logical operation circuit, such as a CMOS-based logical operation circuit.

It is mentioned above that if the data elements currently stored in the first storage unit 320 are sufficient for performing one second operation, the control unit 340 controls the second computing unit 330 to perform one second operation. In other words, if the data elements currently stored in the first storage unit 320 include data elements required for performing one second operation, the control unit 340 controls the second computing unit 330 to perform one second operation.

Assuming that the second operation performed by the second computing unit 330 is a pooling operation and a size of a sliding window corresponding to the second operation is 2×2, elements (1,1), (1,2), (2,1), and (2,2) of the second matrix need to be obtained by the second computing unit 330 to perform a first pooling operation. For example, the input matrix shown in FIG. 1 is the first matrix. When the first computing unit 310 performs a fifth convolution operation, the first storage unit 320 obtains the element (2,2) of the second matrix. In this case, the first storage unit 320 stores elements (1,1), (1,2), (1,3), (2,1), and (2,2) of the second matrix. These elements include the elements required by the second computing unit 330 to perform the first pooling operation, that is, the elements (1,1), (1,2), (2,1), and (2,2) of the second matrix. Therefore, after the first computing unit 310 performs the fifth convolution operation, the second computing unit 330 may be controlled to perform one pooling operation.

In the claimed invention, the first computing unit 310 is a crossbar, and the first operation is a convolution operation.

Optionally, in some embodiments, the second computing unit 330 may be a crossbar, and the second operation may be a convolution operation.

In the claimed invention, a size of a kernel of the first operation is the same as that of a kernel of the second operation.

From the foregoing description about the embodiment in FIG. 2, it can be learned that a crossbar converts a digital signal-based operation into an analog signal-based operation (an analog operation for short) by using an ADC, and the analog operation has a fast computation speed, so that neural network computation efficiency can be improved. Further, the crossbar stores a convolution kernel in an NVM node of the crossbar, and the NVM node has a non-volatile characteristic. Therefore, the convolution kernel does not need to be stored in a storage unit. In this way, storage overheads of the storage unit are reduced.

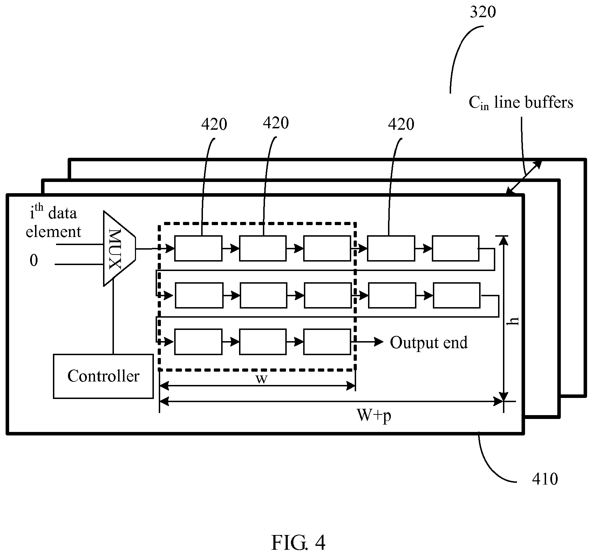

In the claimed invention, the computing device 300 further includes the first storage unit 320. Further, as shown in FIG. 4, the first storage unit 320 includes a first line buffer 410. Each register 420 in the first line buffer 410 may be configured to store one element of a matrix.

It should be understood that a line buffer (line buffer, LB) may also be referred to as a line cascaded register or a row buffer. The line buffer may be formed by a plurality of registers that are connected in a head-to-tail manner, and each register is configured to store one data element. The register in the line buffer may also be referred to as a shift register. Each time a first register in the line buffer stores a new data element, an old data element in the line buffer is shifted backward, and a data element in a last register may be discarded.

It should be understood that no specific limitation is imposed on a storage medium of the register 420 in this embodiment of this application. For example, the storage medium of the register 420 may be a static random access memory (static random access memory, SRAM) or may be an NVM.

It can be learned from FIG. 4 that the first storage unit 320 may include Cᵢₙ line buffers (Cᵢₙ≥1). The first line buffer 410 may be any one of the Cᵢₙ line buffers. Cᵢₙ may represent a quantity of convolution kernels included in the first computing unit 310. In other words, each convolution kernel stored in the first computing unit 310 may correspond to one line buffer, and when the first computing unit 310 uses a convolution kernel to perform a convolution operation, the control unit 340 stores intermediate data computed by using the convolution kernel into a line buffer corresponding to the convolution kernel.

The computing device provided in this embodiment of this application uses a line buffer as a storage unit, and compared with a DRAM and an eDRAM, the line buffer is characterized by easy operation and fast addressing and can improve neural network computation efficiency.

In the claimed invention, the first line buffer 410 includes N registers 420. The N registers 420 in the first line buffer 410 sequentially store elements of a third matrix in row-major order or column-major order. The third matrix is a matrix that is obtained after zero adding is performed on the second matrix for performing the second operation on the second matrix, and N is greater than or equal to (h-1)×(W+p)+w. h represents a quantity of rows of a kernel corresponding to the second operation, w represents a quantity of columns of the kernel corresponding to the second operation. W represents a quantity of columns of the second matrix, p represents a quantity of rows or a quantity of columns of elements 0 that need to be added to the second matrix to perform the second operation on the second matrix, h, w, p, W, and N are all positive integers not less than 1.

It is mentioned above that the N registers 420 in the first line buffer 410 may sequentially store the elements of the third matrix in row-major order or column-major order. The row-major order means that the first line buffer 410 first sequentially reads a 0^{th} element to a last element in a 0^{th} row of the third matrix, then sequentially reads a 0^{th} element to a last element in a first row of the third matrix, and so on. The column-major order means that the first line buffer 410 first sequentially reads a 0^{th} element to a last element in a 0^{th} column of the third matrix, then sequentially reads a 0^{th} element to a last element in a first column of the third matrix, and so on. Whether the first line buffer 410 reads the elements in the third matrix in row-major order or column-major order is determined by a sliding direction of a sliding window corresponding to the second operation. If the sliding window corresponding to the second operation first slides along a row of the matrix, the first line buffer 410 may read the elements in the third matrix in row-major order; or if the sliding window corresponding to the second operation first slides along a column of the matrix, the first line buffer 410 may read the elements in the third matrix in column-major order.

It should be noted that if the second operation is a convolution operation, dimension consistency between an input matrix and an output matrix is usually required, and therefore zero adding needs to be performed on the second matrix to obtain the third matrix. However, this is not limited in this embodiment of this application. In some embodiments, consistency between the input matrix and the output matrix may not be required. In this case, a quantity of rows and/or a quantity of columns required for zero adding on the second matrix is 0 (in other words, zero adding does not need to be performed on the second matrix). In this case, the third matrix and the second matrix in this embodiment of this application are a same matrix, and p=0.

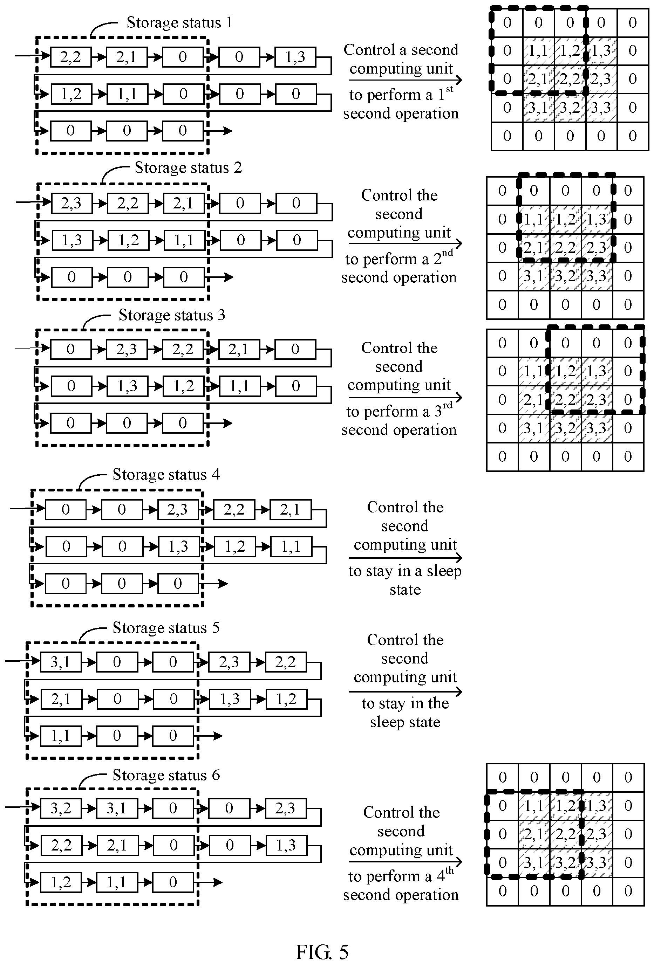

It is mentioned above that N=(h-1)×(W+p)+w. The following describes a meaning of the foregoing value of N in detail by using FIG. 4 and FIG. 5 as examples. In the embodiment shown in FIG. 4, both h and w are 3. To be specific, a convolution kernel of the second operation is a 3×3 convolution kernel. In this case, the first line buffer includes 13 registers. The input matrix shown in FIG. 1 is considered as the second matrix, and the third matrix may be a 5×5 matrix obtained after zero adding is performed on the second matrix shown in FIG. 1. Assuming that a sliding window sequentially slides in a manner shown in FIG. 1, that is, slides along a row direction of the third matrix, the first line buffer 410 sequentially reads the elements in the third matrix in row-major order. When the first line buffer 410 reads a thirteenth element of the third matrix in row-major order (corresponding to a storage status 1 in FIG. 5), the first line buffer 410 stores elements required by the second computing unit to perform a 1^{st} second operation (elements stored in registers in a dashed-line box in FIG. 5 are the elements required by the second computing unit to perform the 1^{st} second operation). In this case, the second computing unit 330 may be controlled to perform the 1^{st} second operation. Then, when the first line buffer 410 reads a fourteenth element of the third matrix in row-major order (corresponding to a storage status 2 in FIG. 5), the first line buffer 410 stores elements required by the second computing unit to perform a 2^{nd} second operation. In this case, the second computing unit 330 may be controlled to perform the 2^{nd} second operation. Then, when the first line buffer 410 reads a fifteenth element of the third matrix in row-major order (corresponding to a storage status 3 in FIG. 5), the first line buffer 410 stores elements required by the second computing unit 330 to perform a 3^{rd} second operation. In this case, the second computing unit 330 may be controlled to perform the 3^{rd} second operation. Then, when the first line buffer 410 reads a sixteenth element and a seventeenth element of the third matrix in row-major order (corresponding to a storage status 4 and a storage status 5 in FIG. 5), elements stored in the first line buffer 410 are insufficient, and the second computing unit 330 cannot perform a 4^{th} second operation. In this case, the control unit 340 may control the second computing unit to enter a sleep state. Then, when the first line buffer 410 reads an eighteenth element of the third matrix in row-major order (corresponding to a storage status 6 in FIG. 5), the first line buffer 410 stores elements required by the second computing unit 330 to perform a 4^{th} second operation. In this case, the second computing unit 330 may be controlled to perform the 4^{th} second operation. A subsequent process is similar, and details are not described herein again.

From the process shown in FIG. 5, it can be learned that setting of a quantity of the N registers in the first line buffer 410 allows that data elements required by the second computing unit 330 to perform any second operation simultaneously and always appear in the first line buffer 410 though the N registers cannot simultaneously store all data elements computed by the first computing unit. Specifically, the data elements appear in the registers in the dashed-line boxes shown in FIG. 5. If the quantity of registers in the first line buffer 410 is less than (h-1)×(W+p)+w, it cannot be ensured that the data elements required by the second computing unit 330 to perform any second operation simultaneously and always appear in the first line buffer 410; or if the quantity of registers in the first line buffer 410 is greater than (h-1)×(W+p)+w, there is a waste of register resources.

Therefore, by setting N=(h-1)×(W+p)+w in this embodiment of this application, the first line buffer is allowed to buffer data between neural network layers at minimum storage costs.

It should be noted that whether the first line buffer 410 reads the data elements computed by the first computing unit 310 or performs zero adding may be implemented by a multiplexer MUX. Specifically, as shown in FIG. 4, the first line buffer 410 may include a controller and a multiplexer MUX. The controller sends a control signal to the multiplexer MUX, to control whether the MUX reads the data elements computed by the first computing unit 310 or performs zero adding. The control signal sent by the controller may come from a pre-stored control instruction or logic.

Optionally, in some embodiments, as shown in FIG. 4, the second computing unit is a crossbar, X target registers 420 of the N registers 420 are directly connected to X rows of the second computing unit 330 respectively. The X target registers 420 are a [1+k×(W+p)]^{th} register to a [w+k×(W+p)]^{th} register of the N registers 420. A value of k is a positive integer ranging from 0 to h-1, and X=h×w. The control unit 340 is specifically configured to: store the i^{th} data element of the second matrix into the first line buffer 410; and if data elements currently stored in the X target registers 420 are sufficient for performing one second operation, control the second computing unit 330 to operate, so as to perform one second operation on the data elements stored in the X target registers 420.

It can be learned from the foregoing description that when N=(h-1)×(W+p)+w, data required by a second execution unit to perform any second operation simultaneously and always appears at a same location of the N registers, that is, a location of the X target registers 420. For example, in FIG. 4, h=w=3, the first line buffer 410 includes N=13 registers 420, the X target registers are nine registers in a dashed-line box, and the nine registers are a first register, a second register, a third register, a sixth register, a seventh register, an eighth register, an eleventh register, a twelfth register, and a thirteenth register among the 13 registers.

It can be learned from FIG. 5 that the data elements required by the second computing unit 330 to perform any second operation always appear in the nine registers. In this embodiment of this application, this characteristic of the first line buffer 410 is used to directly connect the X target registers 420 to the X rows of the second computing unit 330 respectively. In this way, the control unit does not need to perform an addressing operation but only needs to control, when the X target registers 420 store the data elements required for performing one second operation, the second computing unit to enter an active state from the sleep state, to perform one second operation. Therefore, the addressing operation is avoided by directly connecting the X target registers 420 to the X rows of the second computing unit 330 respectively, so that neural network computation efficiency is improved.

In some embodiments, directly connecting the X target registers 420 to the X rows of the second computing unit 330 respectively may mean connecting the X target registers 420 to X rows of hardwires of the second computing unit 330 respectively.

In the claimed invention, the control unit 340 is specifically configured to: control, in an n^{th} clock cycle, the first computing unit 310 to perform the i^{th} first operation on the first matrix, to obtain the i^{th} data element of the second matrix, where the i^{th} data element of the second matrix is located in a last column of the second matrix, and an (i+1)^{th} data element of the second matrix is located at a starting location of a row next to a row in which the i^{th} data element is located; or the i^{th} data element of the second matrix is located in a last row of the second matrix, and an (i+1)^{th} data element of the second matrix is located at a starting location of a column next to a column in which the i^{th} data element is located. The control unit 340 is further configured to: control, in an (n+t)^{th} clock cycle, the first computing unit 310 to perform an (i+1)^{th} first operation of the M first operations on the first matrix, where t is a positive integer greater than 1; and control, in at least one clock cycle between the (n+1)^{th} clock cycle and the (n+t)^{th} clock cycle, the first line buffer to store an element 0.

It is mentioned above that the first computing unit 310 performs the first operation on the input first matrix. In some embodiments, if the first operation is a convolution operation that requires dimension consistency between an input matrix and an output matrix, before the first operation is performed, zero adding needs to be first performed on the first matrix, to obtain a fourth matrix. Further, in some embodiments, to store an element of the fourth matrix, the computing device 300 may further configure, for the first computing unit 310, a second storage unit that has a same structure and/or function as the foregoing first storage unit 320. The second storage unit includes a second line buffer. The second line buffer includes N registers, and the N registers in the second line buffer sequentially store elements of the fourth matrix in row-major order or column-major order.

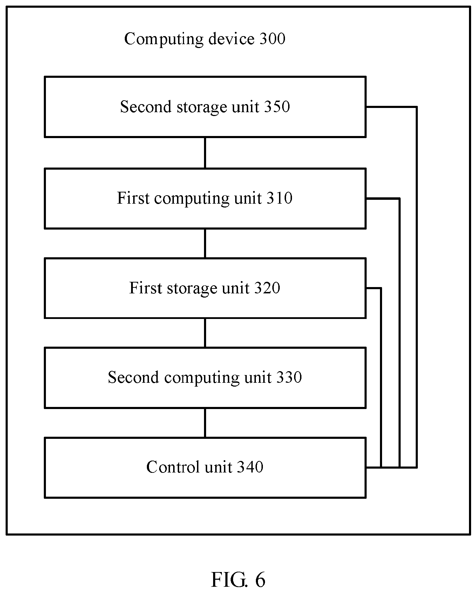

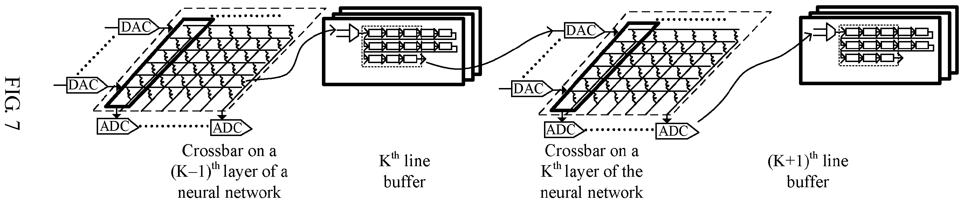

As shown in FIG. 6, a second storage unit 350 may be connected to a first computing unit 310 and is configured to store data elements required by the first computing unit 310 to perform a first operation. A first storage unit 320 is connected to a second computing unit 330 and is configured to store data elements required by the second computing unit 330 to perform a second operation. In other words, in this embodiment of this application, a crossbar and a line buffer are alternately deployed. It is equivalent that for each crossbar, a buffer that is very close to the crossbar is configured. This not only can improve fetching efficiency, but is also beneficial for a subsequent pipeline control mechanism. For example, in FIG. 7, a crossbar located on a (K-1)^{th} layer of a neural network is connected to a K^{th} line buffer, and a crossbar located on a K^{th} layer of the neural network is connected to a (K+1)^{th} line buffer. The K^{th} line buffer may include Cᵢₙ₁ line buffers, and Cᵢₙ₁ represents a quantity of convolution kernels included in the crossbar located on the (K-1)^{th} layer of the neural network. Similarly, the (K+1)^{th} line buffer may include Cᵢₙ₂ line buffers, and Cᵢₙ₂ represents a quantity of convolution kernels included in the crossbar located on the K^{th} layer of the neural network. This structure in which a crossbar and a buffer are alternately deployed is equivalent to configuring, for each computing unit, a buffer that is very close to the computing unit. This not only can improve fetching efficiency, but is also beneficial for a subsequent pipeline control mechanism.

It should be noted that if an i^{th} data element of a second matrix is located in a last column of the second matrix, and an (i+1)^{th} data element of the second matrix is located at a starting location of a row next to a row in which the i^{th} data element is located, it indicates that a sliding window corresponding to the first operation slides in row-major order, and when completing computing the i^{th} data element of the second matrix, the sliding window has slid to the end of a row of a fourth matrix. Similarly, if an i^{th} data element of a second matrix is located in a last row of the second matrix, and an (i+1)^{th} data element of the second matrix is located at a starting location of a column next to a column in which the i^{th} data element is located, it indicates that a sliding window corresponding to the first operation slides in column-major order, and when completing computing the i^{th} data element of the second matrix, the sliding window has slid to the end of a column of a fourth matrix.

For example, the sliding window slides along a row of the fourth matrix. When the sliding window slides to the end of the row of the fourth matrix, the first computing unit 310 cannot perform an (i+1)^{th} first operation until a second line buffer reads (s-1)×(W+p)+(w-1) pieces of data. Therefore, a row feeding process of the sliding window brings some idle cycles. In these idle cycles, no data element is input from the first computing unit 310 to a first buffer unit 420. This phenomenon is referred to as a line feeding bottleneck in this embodiment of this application. To alleviate the line feeding bottleneck, in this embodiment of this application, zero adding is performed in the first buffer unit 420 in these idle cycles, so as to make preparations for the second computing unit 330 to perform a next second operation.

In some embodiments, t is greater than (s-1)×(W+p)+(w-1).

In some embodiments, t=(s-1)×(W+p)+(w-1), and the control unit 340 may be specifically configured to: control, in an (n+1)^{th} clock cycle to an (n+t)^{th} clock cycle, the first line buffer 410 to sequentially store (s-1)×(W+p)+(w-1) elements 0, where s represents a sliding step of the first operation.

It is mentioned above that when the sliding window slides along a row of the fourth matrix and slides to the end of the row of the fourth matrix, the first computing unit 310 cannot perform a next first operation until the second line buffer reads the (s-1)×(W+p)+(w-1) pieces of data. In this embodiment of this application, t is set to (s-1)×(W+p)+(w-1). This means that the control unit 340 costs only (s-1)×(W+p)+(w-1) clock cycles to add, in the second line buffer, (s-1)×(W+p)+(w-1) pieces of data required by a next second operation. In other words, the second line buffer is controlled to read one new data element in each clock cycle of the (n+1)^{th} clock cycle to the (n+t)^{th} clock cycle. In the (n+1)^{th} clock cycle to the (n+t)^{th} clock cycle, to alleviate the line feeding bottleneck as much as possible, the control unit 340 may control the first line buffer 410 to sequentially read (s-1)×(W+p)+(w-1) elements 0, so as to maximize neural network computation efficiency.

For ease of understanding, the following describes a pipeline control mechanism of the control unit 340 in detail by using an example in which both a K^{th} neural network layer and a (K+1)^{th} neural network layer are convolution layers and both a first operation and a second operation are convolution operations. In the following embodiment, a first computing unit is configured to perform an operation of the K^{th} neural network layer, and the first computing unit is a crossbar. Therefore, the first computing unit is referred to as a K^{th} crossbar and a second line buffer that provides a first matrix for the first computing unit is referred to as a K^{th} line buffer in the following description. Similarly, a second computing unit is configured to perform an operation of the (K+1)^{th} neural network layer, and the second computing unit is a crossbar. Therefore, the second computing unit is referred to as a (K+1)^{th} crossbar and a first line buffer that provides a second matrix for the second computing unit is referred to as a (K+1)^{th} line buffer in the following description.

Step 1. To ensure dimension consistency between the first matrix input by the K^{th} crossbar and the second matrix output by the K^{th} crossbar, first control a multiplexer MUX in the K^{th} line buffer to read, for the K^{th} line buffer, elements 0 of the first p/2 rows of the first matrix, where each row includes W+p elements 0.

Step 2. Sequentially read data elements of h-1-p/2 rows of the first matrix, and add p/2 elements 0 before a data element at the head of each row of the first matrix is read and add p/2 elements 0 before a data element at the end of each row of the first matrix is read.

Step 3. Continue to read p/2 elements 0 at the head of an h^{th} row of the first matrix and the first w-1-p/2 data elements of the h^{th} row. In this case, the K^{th} crossbar may be controlled to always stay in a sleep state.

Step 4. Continue to read subsequent data elements of the h^{th} row of the first matrix. In this case, each time a data element is read, the K^{th} line buffer stores sufficient data elements required by one convolution operation, and the K^{th} layer crossbar performs one convolution operation and outputs a result to the (K+1)^{th} line buffer.

Step 5. When the K^{th} crossbar completes calculating the end of a row of a fourth matrix (a matrix formed after zero adding is performed on the first matrix), (s-1)×(W+p)+(w-1) pieces of data need to be prepared for a next convolution operation, and s is a step. It should be noted that when next s rows of data are being prepared, the K^{th} crossbar is controlled to always stay in the sleep (Sleep) state. In this case, the (K+1)^{th} line buffer cannot read intermediate data computed by the K^{th} crossbar. This phenomenon is referred to as a line feeding bottleneck in this embodiment of this application.

To resolve the line feeding problem, when data, required by a first convolution operation on a next row, is being prepared for the K^{th} crossbar, the (K+1)^{th} line buffer may be controlled to read an element 0 in these idle clock cycles, so as to reduce a waste of clock cycles caused when no valid data element flows in from an upper layer crossbar. This pipeline control mechanism improves neural network computation efficiency while ensuring that an entire pipeline occupies a minimum clock cycle.

The K^{th} neural network layer and the (K+1)^{th} neural network layer in the foregoing description are in a convolution-convolution connection structure. In addition to the convolution-convolution connection structure, another relatively common connection structure of neural network layers is a convolution-pooling-convolution connection structure. A main principle of a pipeline control mechanism of the convolution-pooling-convolution connection structure is similar to that of the pipeline control mechanism of the convolution-convolution connection structure described above. Specifically, for a convolution-pooling connection part in the convolution-pooling-convolution connection structure, in consideration that a step s of a pooling operation is usually greater than 1, for a computing unit of a pooling layer (the computing unit may also be referred to as a pooling circuit, and an implementation of the computing unit may not be a crossbar, for example, for max-pooling, the computing unit may be implemented by using an NVM multiplexed comparator, and for mean-pooling, the computing unit may be implemented by using a crossbar), each time s pieces of data flow into a line buffer corresponding to the pooling layer, the computing unit of the pooling layer may be switched to an active (Active) state, to perform one pooling operation. In other words, the computing unit of the pooling layer needs to sleep for s-1 clock cycles each time after the computing unit operates, to wait for s pieces of data that are required for performing one pooling operation to flow in from a convolution layer. When the convolution layer completes calculating the end of a row of a matrix on which zero adding is performed, the foregoing line feeding problem of the convolution-convolution connection structure also exists. In next several clock cycles, the convolution layer outputs no valid data to the line buffer corresponding to the pooling layer. The pooling operation usually does not need zero adding; therefore, in the w-1 clock cycles, the line buffer corresponding to the pooling layer is in a state in which no valid data is read, and the computing unit of the pooling layer stays in the sleep state. In addition, when the convolution layer is in a row feeding process, the line buffer corresponding to the pooling layer needs to prepare s-1 rows of data elements before computation can be performed. In the (s-1)×W clock cycles, the computing unit of the pooling layer may stay in the sleep state. For a pooling-convolution connection part, a pipeline control mechanism of the control unit is basically the same as the pipeline control mechanism of the convolution-convolution connection structure. For details, refer to the pipeline control mechanism of the convolution-convolution connection structure. Details are not described herein again.

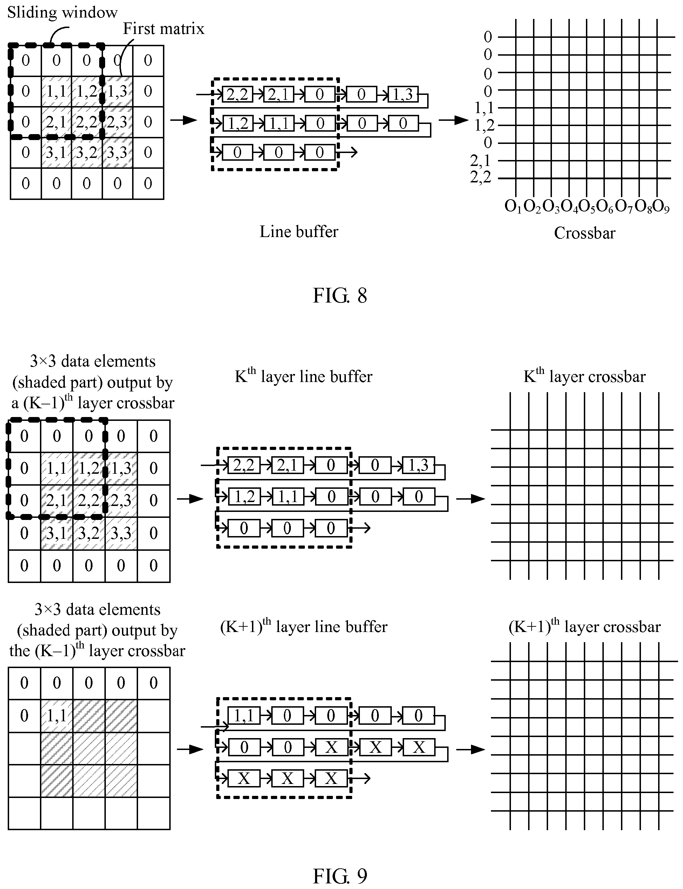

The following describes this embodiment of this application in more detail with reference to specific examples. It should be noted that examples in FIG. 8 and FIG. 9 are provided merely for helping a person skilled in the art understand this embodiment of this application rather than restricting this embodiment of this application to a specific numerical value or a specific scenario in the examples. Obviously, a person skilled in the art can make various equivalent modifications or variations to the examples in FIG. 8 and FIG. 9, and such modifications or variations shall also fall within the scope of this embodiment of this application.

By using a convolution-convolution neural network connection structure as an example, it is assumed that a quantity of dimensions of a result output by a (K-1)^{th} layer crossbar used for convolution computation is 3×3, a size of a convolution kernel of each layer is 3×3, and a sliding step s is 1. To ensure size consistency between an input matrix (or an input feature map) and an output matrix (or an output feature map) of a K^{th} layer crossbar used for convolution computation, zero adding needs to be performed around a feature map of an original output result of the (K-1)^{th} layer crossbar. As shown in FIG. 8, a quantity of dimensions of a K^{th} layer input matrix on which convolution computation is to be performed is 3×3, and 0s need to be added around the input matrix, so that the quantity of dimensions of the input matrix is 5×5. The input matrix may be a computation output result of the (K-1)^{th} layer crossbar, or may be original input data (original data such as an image, voice, or a text).

An original size of the to-be-computed input matrix is 3×3, a size of a to-be-computed convolution kernel is 3×3, and 0s need to be added around the original input matrix, so as to match dimensions of an input result with those of an output result. Therefore, a length N of registers in a line buffer provided in this embodiment of this application is (h-1)×(W+p)+w=(3-1)×(3+2)+3=13. If a conventional data storage manner is used, all intermediate result data needs to be stored. Therefore, a size of a memory required by each neural network layer is 5×5=25. A working principle of the line buffer provided in this embodiment of this application is as follows: To-be-computed data sequentially flows into the line buffer in a row-reading manner, as shown in FIG. 8. In a next clock cycle, a MUX in the line buffer is controlled to write a value (2,3) that is in a third row and a fourth column of an input matrix on which zero adding is performed, and old data in the line buffer is sequentially shifted backward by one bit. In addition, in the line buffer, corresponding data elements on which convolution computation is to be performed (data elements stored in registers in a dashed-line box in FIG. 8) is directly read into a subsequent crossbar for computation. A process from data element reading by the line buffer to data element flowing into a subsequent crossbar for computation costs very low time overheads and may usually be completed in one clock cycle.

Based on the working principle of the buffer line described in FIG. 8, a pipeline control mechanism provided in this embodiment of this application is described by using the convolution-convolution neural network structure as an example. Assuming that a quantity of dimensions of each computation result output by a crossbar is 3×3 and a size of a convolution kernel is 3×3, dimension consistency between an input and an output of convolution-layer computation is ensured in a manner of adding 0s around a result output by the crossbar. Referring to a convolution-convolution neural network connection structure shown in FIG. 9, a specific pipeline control method provided in this application is as follows:

Step 1. Control, by using five clock cycles, a multiplexer MUX to read a first row of added zero data and send the added zero data to a (K+1)^{th} line buffer. In this case, a K^{th} layer crossbar stays in a sleep state.

Step 2. Continue to read, in one clock cycle, a first element 0 at the head of a second row. In this case, the K^{th} layer crossbar stays in the sleep state.

Step 3. Continue to control the MUX to sequentially read, from a (K-1)^{th} layer crossbar, computation output results (1,1), (1,2), and (1,3) and one element 0 that is at the end of the second row (four clock cycles are taken in total). In this case, the K^{th} layer crossbar stays in the sleep state. However, in the four clock cycles from reading the first valid computation input result (1,1) from the (K-1)^{th} layer crossbar, a (K+1)^{th} layer line cascaded register starts pre-reading, in the four clock cycles, the first four added 0s of the first row, so that the K^{th} layer crossbar computes an output matrix. In this case, a (K+1)^{th} layer crossbar stays in the sleep state.

Step 4. Continue to read one element 0 at the head of a third row for a K^{th} layer line buffer, and read, from the (K-1)^{th} layer crossbar, an original computation output result (2,1) at a third row and a first column (two clock cycles are taken in total). In the two clock cycles, the K^{th} layer crossbar still stays in the sleep state. However, at the same time, in the two clock cycles, a (K+1)^{th} layer line buffer continues to read the element 0 at the end of the first row and the element 0 at the head of the third row. In this case, the (K+1)^{th} layer crossbar stays in the sleep state.

Step 5. In a next clock cycle, the K^{th} layer line buffer reads, from the (K-1)^{th} layer crossbar, an original computation output result (2,2) at the third row and a second column. As shown in FIG. 8, in this case, the K^{th} layer line buffer stores data satisfying one convolution operation to be performed by the K^{th} layer crossbar. The crossbar performs analog computation; therefore, in this clock cycle, buffered data may be sequentially input into the K^{th} layer crossbar for one time of multiply accumulate (convolution) computation, and a computation result (1,1) is input into the (K+1)^{th} layer line buffer. In this case, the K^{th} layer crossbar enters an active state, and the (K+1)^{th} layer crossbar stays in the sleep state.

Step 6. In two subsequent clock cycles, read, from the (K-1)^{th} layer crossbar, a valid output (2,3) at the third row and a third column and one element 0 at the end of the third row, where the valid output (2,3) and the element 0 are used by the K^{th} layer crossbar to perform two convolution operations, and input output results (1,2) and (1,3) into the (K+1)^{th} layer line buffer. In the two clock cycles, the K^{th} layer crossbar stays in the active state to perform the convolution operations, and the (K+1)^{th} layer crossbar still stays in the sleep state, to wait the (K+1)^{th} layer line buffer to buffer data required by one convolution operation.

Step 7. In next two clock cycles, the K^{th} layer line buffer needs to first buffer an element 0 at the head of a fourth row and then receive a computation output result (3,1) from the (K-1)^{th} layer crossbar. In the two clock cycles, the K^{th} layer crossbar stays in the sleep state, to wait the K^{th} layer line buffer to buffer data required by one convolution operation. In the two clock cycles in which data required for performing one convolution operation is being prepared for the K^{th} layer crossbar, no valid computation output result of the K^{th} layer crossbar is input into the (K+1)^{th} layer line buffer. Therefore, the (K+1)^{th} layer line buffer is in a line feeding state, and the (K+1)^{th} layer crossbar stays in the sleep state. To resolve a line feeding problem of the (K+1)^{th} layer line buffer in the two clock cycles, a MUX of the (K+1)^{th} layer line buffer is controlled, by using the two clock cycles, to perform a zero adding operation on the end of the second row and the head of a next row of the output matrix of the K^{th} layer crossbar, so that a problem that no valid data flows from the K^{th} layer crossbar into the (K+1)^{th} layer line buffer in the two clock cycles can be resolved.

Step 8. In a next clock cycle, the K^{th} layer line buffer reads inflow data (3,2) from the (K-1)^{th} layer crossbar, the K^{th} layer crossbar is switched from the sleep state to the active state to sequentially perform multiply accumulate (convolution) computation, and inputs a computation result (2,1) into the (K+1)^{th} layer line buffer. In this case, the (K+1)^{th} layer crossbar stays in the sleep state.

Step 9. In a next clock cycle, the K^{th} layer line buffer receives an output computation result (3,3) from the (K-1)^{th} layer crossbar, and the K^{th} layer crossbar stays in the active state to perform one convolution computation and inputs a computation output result (2,2) into the (K+1)^{th} layer line buffer. In this case, the (K+1)^{th} layer crossbar is switched from the sleep state to the active state to perform one convolution computation, and outputs a computation result into a next layer (a (K+2)^{th} layer) line buffer in a same manner.

The following describes a method embodiment of this application, and the method embodiment is corresponding to the apparatus embodiments. Therefore, for a part that is not described in detail, refer to the foregoing apparatus embodiments.

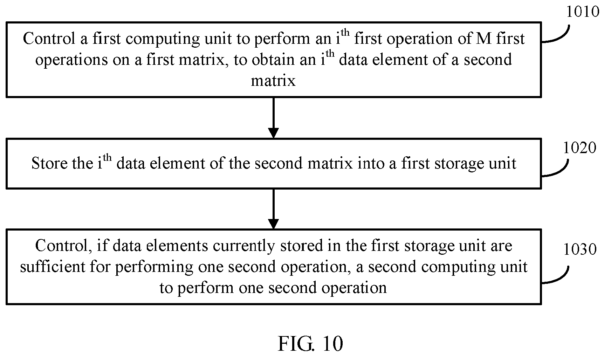

FIG. 10 is a schematic flowchart of a computation method for neural network computation according to an embodiment of this application. The neural network includes a K^{th} neural network layer and a (K+1)^{th} neural network layer, an operation performed by the K^{th} neural network layer includes a first operation, an operation performed by the (K+1)^{th} neural network layer includes a second operation, K is a positive integer not less than 1, and a computing device to which the computation method is applied includes: a first computing unit, configured to perform the first operation on an input first matrix M times, to obtain a second matrix, where M is a positive integer not less than 1; and a second computing unit, configured to perform the second operation on the input second matrix. The computation method in FIG. 10 includes the following steps:

1010. Control the first computing unit to perform an i^{th} first operation of the M first operations on the first matrix, to obtain an i^{th} data element of the second matrix, where 1≤i≤M.

1020. Store the i^{th} data element of the second matrix into a first storage unit.

1030. Control, if data elements currently stored in the first storage unit are sufficient for performing one second operation, the second computing unit to perform one second operation.

The first operation is a convolution operation and the second operation is a convolution operation or a pooling operation.

In the claimed invention, the computing device includes the first storage unit, the first storage unit includes a first line buffer, the first line buffer includes N registers, the N registers in the first line buffer sequentially store elements of a third matrix in row-major order or column-major order, and the third matrix is a matrix that is obtained after zero adding is performed on the second matrix for performing the second operation on the second matrix, where N=(h-1)×(W+p)+w, h represents a quantity of rows of a kernel corresponding to the second operation, w represents a quantity of columns of the kernel corresponding to the second operation, W represents a quantity of columns of the second matrix, p represents a quantity of rows or a quantity of columns of elements 0 that need to be added to the second matrix to perform the second operation on the second matrix, and h, w, p, W, and N are all positive integers not less than 1.

Optionally, in some embodiments, the second computing unit is a crossbar, X target registers of the N registers are directly connected to X rows of the second computing unit respectively, and the X target registers are a [1+k×(W+p)]^{th} register to a [w+k×(W+p)]^{th} register of the N registers, where a value of k is a positive integer ranging from 0 to h-1, and X=h×w. Step 1020 may include: storing the i^{th} data element of the second matrix into the first line buffer. Step 1030 may include: if data elements currently stored in the X target registers are sufficient for performing one second operation, controlling the second computing unit to operate, so as to perform one second operation on the data elements stored in the X target registers.

Step 1010 includes controlling, in an n^{th} clock cycle, the first computing unit to perform the i^{th} first operation on the first matrix, to obtain the i^{th} data element of the second matrix, where the i^{th} data element of the second matrix is located in a last column of the second matrix, and an (i+1)^{th} data element of the second matrix is located at a starting location of a row next to a row in which the i^{th} data element is located; or the i^{th} data element of the second matrix is located in a last row of the second matrix, and an (i+1)^{th} data element of the second matrix is located at a starting location of a column next to a column in which the i^{th} data element is located. The computation method in FIG. 10 further includes: controlling, in an (n+t)^{th} clock cycle, the first computing unit to perform an (i+1)^{th} first operation of the M first operations on the first matrix, where t is a positive integer greater than 1; and controlling, in at least one clock cycle between the (n+1)^{th} clock cycle and the (n+t)^{th} clock cycle, the first line buffer to store an element 0.

Optionally, in some embodiments, t=(s-1)×(W+p)+(w-1), and the controlling, in at least one clock cycle between the (n+1)^{th} clock cycle and the (n+t)^{th} clock cycle, the first line buffer to store an element 0 includes: controlling, in the (n+1)^{th} clock cycle to the (n+t)^{th} clock cycle, the first line buffer to sequentially store (s-1)×(W+p)+(w-1) elements 0, where s represents a sliding step of the first operation.

The first computing unit is a crossbar.

A person of ordinary skill in the art may be aware that in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A computing device (300) for neural network computation, wherein the neural network comprises a K^{th} neural network layer and a (K+1)^{th} neural network layer, an operation performed by the K^{th} neural network layer comprises a first operation, an operation performed by the (K+1)^{th} neural network layer comprises a second operation, and K is a positive integer not less than 1; and
the computing device comprises:
a first computing unit (310), configured to perform the first operation on an input first matrix M times, to obtain a second matrix, wherein M is a positive integer not less than 1;
a second computing unit (330), configured to perform the second operation on the second matrix; and
a control unit (340), configured to:
control the first computing unit to perform an i^{th} first operation of the M first operations on the first matrix, to obtain an i^{th} data element of the second matrix, wherein 1 <i<M;
store the i^{th} data element of the second matrix into a first storage unit (320);
control using an inter-layer pipeline control mechanism, if data elements currently stored in the first storage unit are sufficient for performing one second operation, the second computing unit to perform one second operation, wherein
the first operation is a convolution operation and the second operation is a convolution operation or a pooling operation,
wherein the first storage unit is controlled to store only a part of intermediate data that is between the K^{th} neural network layer and the (K+1)^{th} neural network layer;
wherein the computing device comprises the first storage unit, the first storage unit comprises a first line buffer, the first line buffer comprises N registers, the N registers in the first line buffer sequentially store elements of a third matrix in row-major order or column-major order, and the third matrix is a matrix that is obtained after zero adding is performed on the second matrix for performing the second operation on the second matrix, wherein N=(h-1)×(W+p)+w, h represents a quantity of rows of a kernel corresponding to the second operation, w represents a quantity of columns of the kernel corresponding to the second operation, W represents a quantity of columns of the second matrix, p represents a quantity of rows or a quantity of columns of elements 0 that need to be added to the second matrix to perform the second operation on the second matrix, and h, w, p, W, and N are all positive integers not less than 1;
the first computing unit is a crossbar, and a size of a kernel of the first operation is the same as that of a kernel of the second operation; the computing device further includes a second storage unit, the second storage unit includes a second line buffer, the second line buffer includes N registers, the N registers in the second line buffer sequentially store elements of a fourth matrix in row-major order or column-major order, and the fourth matrix is a matrix that is obtained after zero adding is performed on the first matrix for performing the first operation on the first matrix;
wherein the control unit is specifically configured to:
control, in an n^{th} clock cycle, the first computing unit to perform the i^{th} first operation on the first matrix, to obtain the i^{th} data element of the second matrix, wherein the i^{th} data element of the second matrix is located in a last column of the second matrix, and an (i+1)^{th} data element of the second matrix is located at a starting location of a row next to a row in which the i^{th} data element is located; or the i^{th} data element of the second matrix is located in a last row of the second matrix, and an (i+1)^{th} data element of the second matrix is located at a starting location of a column next to a column in which the i^{th} data element is located;
control, in an (n+t)^{th} clock cycle, the first computing unit to perform an (i+1)^{th} first operation of the M first operations on the first matrix, wherein t is a positive integer greater than 1; and
control, in at least one clock cycle of an(n+1)^{th} clock cycle and the (n+t)^{th} clock cycle, the first line buffer to store an element 0.

2. The computing device according to claim 1, wherein the second computing unit is a crossbar, X target registers of the N registers are directly connected to X rows of the second computing unit respectively, and the X target registers are a [1+k×(W+p)]^{th} register to a [w+k×(W+p)]^{th} register of the N registers, wherein a value of k is a positive integer ranging from 0 to h-1, and X=h×w; and
the control unit is specifically configured to:
store the i^{th} data element of the second matrix into the first line buffer; and
if data elements currently stored in the X target registers are sufficient for performing one second operation, control the second computing unit to operate, so as to perform one second operation on the data elements stored in the X target registers.

3. The computing device according to claim 1 or 2, wherein t=(s-1)×(W+p)+(w-1), and the control unit is specifically configured to:
control, in the (n+1)^{th} clock cycle to the (n+t)^{th} clock cycle, the first line buffer to sequentially store (s-1)×(W+p)+(w-1) elements 0, wherein s represents a sliding step of the first operation.

4. A computation method for neural network computation, wherein the neural network comprises a K^{th} neural network layer and a (K+1)^{th} neural network layer, an operation performed by the K^{th} neural network layer comprises a first operation, an operation performed by the (K+1)^{th} neural network layer comprises a second operation, K is a positive integer not less than 1, and a computing device to which the computation method is applied comprises:
a first computing unit, configured to perform the first operation on an input first matrix M times, to obtain a second matrix, wherein M is a positive integer not less than 1; and
a second computing unit, configured to perform the second operation on the second matrix; and
the computation method comprises:
controlling (1010) the first computing unit to perform an i^{th} first operation of the M first operations on the first matrix, to obtain an i^{th} data element of the second matrix, wherein 1 <i<M;
storing (1020) the i^{th} data element of the second matrix into a first storage unit; and
controlling (1030) using an inter-layer pipeline control mechanism, if data elements currently stored in the first storage unit are sufficient for performing one second operation, the second computing unit to perform one second operation, wherein
the first operation is a convolution operation and the second operation is a convolution operation or a pooling operation,
wherein the method further comprises controlling the first storage unit to store only a part of intermediate data that is between the K^{th} neural network layer and the (K+1)^{th} neural network layer;
the computing device comprises the first storage unit, the first storage unit comprises a first line buffer, the first line buffer comprises N registers, the N registers in the first line buffer sequentially store elements of a third matrix in row-major order or column-major order, and the third matrix is a matrix that is obtained after zero adding is performed on the second matrix for performing the second operation on the second matrix, wherein N=(h-1)×(W+p)+w, h represents a quantity of rows of a kernel corresponding to the second operation, w represents a quantity of columns of the kernel corresponding to the second operation, W represents a quantity of columns of the second matrix, p represents a quantity of rows or a quantity of columns of elements 0 that need to be added to the second matrix to perform the second operation on the second matrix, and h, w, p, W, and N are all positive integers not less than 1;
wherein the first computing unit is a crossbar, and a size of a kernel of the first operation is the same as that of a kernel of the second operation; the computing device further includes a second storage unit, the second storage unit includes a second line buffer, the second line buffer includes N registers, the N registers in the second line buffer sequentially store elements of a fourth matrix in row-major order or column-major order, and the fourth matrix is a matrix that is obtained after zero adding is performed on the first matrix for performing the first operation on the first matrix; and
wherein the controlling the first computing unit to perform an i^{th} first operation of the M first operations on the first matrix comprises:
controlling, in an n^{th} clock cycle, the first computing unit to perform the i^{th} first operation on the first matrix, to obtain the i^{th} data element of the second matrix, wherein the i^{th} data element of the second matrix is located in a last column of the second matrix, and an (i+1)^{th} data element of the second matrix is located at a starting location of a row next to a row in which the i^{th} data element is located; or the i^{th} data element of the second matrix is located in a last row of the second matrix, and an (i+1)^{th} data element of the second matrix is located at a starting location of a column next to a column in which the i^{th} data element is located;
controlling, in an (n+t)^{th} clock cycle, the first computing unit to perform an (i+1)^{th} first operation of the M first operations on the first matrix, wherein t is a positive integer greater than 1; and
controlling, in at least one clock cycle of an (n+1)^{th} clock cycle and the (n+t)^{th} clock cycle, the first line buffer to store an element 0.

5. The computation method according to claim 4, wherein the second computing unit is a crossbar, X target registers of the N registers are directly connected to X rows of the second computing unit respectively, and the X target registers are a [1+k×(W+p)]^{th} register to a [w+k×(W+p)]^{th} register of the N registers, wherein a value of k is a positive integer ranging from 0 to h-1, and X=h×w;
the storing the i^{th} data element of the second matrix into a first storage unit comprises:
storing the i^{th} data element of the second matrix into the first line buffer; and
the controlling, if data elements currently stored in the first storage unit are sufficient for performing one second operation, the second computing unit to perform one second operation comprises:
if data elements currently stored in the X target registers are sufficient for performing one second operation, controlling the second computing unit to operate, so as to perform one second operation on the data elements stored in the X target registers.

6. The computation method according to claim 4 or 5, wherein t=(s-1)×(W+p)+(w-1), and
the controlling, in at least one clock cycle of the (n+1)^{th} clock cycle and the (n+t)^{th} clock cycle, the first line buffer to store an element 0 comprises:
controlling, in the (n+1)^{th} clock cycle to the (n+t)^{th} clock cycle, the first line buffer to sequentially store (s-1)×(W+p)+(w-1) elements 0, wherein s represents a sliding step of the first operation.

## Patentansprüche

1. Datenverarbeitungsvorrichtung (300) zur Neuronalnetzberechnung, wobei das neuronale Netz eine K-te Neuronalnetzschicht und eine (K+1)-te Neuronalnetzschicht umfasst, eine durch die K-te Neuronalnetzschicht ausgeführte Operation eine erste Operation umfasst, eine durch die (K+1)-te Neuronalnetzschicht ausgeführte Operation eine zweite Operation umfasst und K eine positive ganze Zahl nicht kleiner als 1 ist; und
die Datenverarbeitungsvorrichtung Folgendes umfasst:
eine erste Datenverarbeitungseinheit (310), ausgelegt zum M-maligen Ausführen der ersten Operation an einer eingegebenen ersten Matrix, um eine zweite Matrix zu erhalten, wobei M eine positive ganze Zahl nicht kleiner als 1 ist; und
eine zweite Datenverarbeitungseinheit (330), ausgelegt zum Ausführen der zweiten Operation an der zweiten Matrix; und
eine Steuereinheit (340), ausgelegt zum
Steuern der ersten Datenverarbeitungseinheit zur Ausführung einer i-ten ersten Operation der M ersten Operationen an der ersten Matrix, um ein i-tes Datenelement der zweiten Matrix zu erhalten, wobei 1 ≤ i ≤ M ist;
Speichern des i-ten Datenelements der zweiten Matrix in einer ersten Speicherungseinheit (320);
Steuern der zweiten Datenverarbeitungseinheit zur Ausführung einer zweiten Operation unter Verwendung eines Pipeline-Steuermechanismus zwischen Schichten, wenn aktuell in der ersten Speicherungseinheit gespeicherte Datenelemente zum Ausführen einer zweiten Operation ausreichen, wobei
die erste Operation eine Faltungsoperation ist und die zweite Operation eine Faltungsoperation oder eine Pooling-Operation ist,
wobei die erste Speicherungseinheit gesteuert wird zur Speicherung nur eines Teils von Zwischendaten, die zwischen der K-ten Neuronalnetzschicht und der (K+1)-ten Neuronalnetzschicht liegen;
wobei die Datenverarbeitungsvorrichtung die erste Speicherungseinheit umfasst, die erste Speicherungseinheit einen ersten Linienpuffer umfasst, der erste Linienpuffer N Register umfasst, die N Register in dem ersten Linienpuffer sequentiell Elemente einer dritten Matrix in Zeilenhauptreihenfolge oder Spaltenhauptreihenfolge speichern und die dritte Matrix eine Matrix ist, die erhalten wird, nachdem null Hinzufügung an der zweiten Matrix zur Ausführung der zweiten Operation an der zweiten Matrix ausgeführt wird, wobei N=(h-1)x(W+p)+w ist, h eine Anzahl von Zeilen eines der zweiten Operation entsprechenden Kerns repräsentiert, w eine Anzahl von Spalten des der zweiten Operation entsprechenden Kerns repräsentiert, W eine Anzahl von Spalten der zweiten Matrix repräsentiert, p eine Anzahl von Zeilen oder eine Anzahl von Spalten von Elementen 0, die zu der zweiten Matrix hinzugefügt werden müssen, um die zweite Operation an der zweiten Matrix auszuführen, repräsentiert und h, w, p, W und N alle positive ganze Zahlen nicht kleiner als 1 sind;
die erste Datenverarbeitungseinheit eine Kreuzschiene ist und eine Größe eines Kerns der ersten Operation dieselbe wie die eines Kerns der zweiten Operation ist; die Datenverarbeitungsvorrichtung ferner eine zweite Speicherungseinheit umfasst, die zweite Speicherungseinheit einen zweiten Linienpuffer umfasst, der zweite Linienpuffer N Register umfasst, die N Register in dem zweiten Linienpuffer sequentiell Elemente einer vierten Matrix in Zeilenhauptreihenfolge oder Spaltenhauptreihenfolge speichern und die vierte Matrix eine Matrix ist, die erhalten wird, nachdem null Hinzufügung an der ersten Matrix zur Ausführung der ersten Operation an der ersten Matrix ausgeführt wird;
wobei die Steuereinheit speziell ausgelegt ist zum
Steuern der ersten Datenverarbeitungseinheit in einem n-ten Taktzyklus zur Ausführung der i-ten ersten Operation an der ersten Matrix, um das i-te Datenelement der zweiten Matrix zu erhalten, wobei sich das i-te Datenelement der zweiten Matrix in einer letzten Spalte der zweiten Matrix befindet und sich ein (i+1)-tes Datenelement der zweiten Matrix an einem Startort einer Zeile neben einer Zeile befindet, in der sich das i-te Datenelement befindet; oder sich das i-te Datenelement der zweiten Matrix in einer letzten Zeile der zweiten Matrix befindet und sich ein (i+1)-tes Datenelement der zweiten Matrix an einem Startort einer Spalte neben einer Spalte befindet, in der sich das i-te Datenelement befindet;
Steuern der ersten Datenverarbeitungseinheit in einem (n+t)-ten Taktzyklus zur Ausführung einer (i+1)-ten ersten Operation der M ersten Operationen an der ersten Matrix, wobei t eine positive ganze Zahl größer als 1 ist; und
Steuern des ersten Linienpuffers in mindestens einem Taktzyklus eines (n+1)-ten Taktzyklus und des (n+t)-ten Taktzyklus zur Speicherung eines Elements 0.

2. Datenverarbeitungsvorrichtung nach Anspruch 1, wobei die zweite Datenverarbeitungseinheit eine Kreuzschiene ist, X Zielregister der N Register jeweils direkt mit X Zeilen der zweiten Datenverarbeitungseinheit verbunden sind und die X Zielregister ein [1+kx(W+p)]-tes Register bis zu einem [w+kx(W+p)]-ten Register der N Register sind, wobei ein Wert von k eine positive ganze Zahl im Bereich von 0 bis h-1 ist und X=hxw ist; und
die Steuereinheit speziell ausgelegt ist zum
Speichern des i-ten Datenelements der zweiten Matrix in dem ersten Linienpuffer; und,
wenn aktuell in den X Zielregistern gespeicherte Datenelemente zur Ausführung einer zweiten Operation ausreichen, Steuern der zweiten Datenverarbeitungseinheit zur Operation dergestalt, dass eine zweite Operation an den in den X Zielregistern gespeicherten Datenelementen ausgeführt wird.

3. Datenverarbeitungsvorrichtung nach einem der Ansprüche 1 oder 2, wobei t=(s-1)x(W+p)+(w-1) ist und die Steuereinheit speziell ausgelegt ist zum Steuern des ersten Linienpuffers in dem (n+1)-ten Taktzyklus bis zum (n+t)-ten Taktzyklus zur sequentiellen Speicherung von (s-1)x(W+p)+(w-1) Elementen 0, wobei s einen Gleitschritt der ersten Operation repräsentiert.

4. Berechnungsverfahren für Neuronalnetzberechnung, wobei das neuronale Netz eine K-te Neuronalnetzschicht und eine (K+1)-te Neuronalnetzschicht umfasst, eine durch die K-te Neuronalnetzschicht ausgeführte Operation eine erste Operation umfasst, eine durch die (K+1)-te Neuronalnetzschicht ausgeführte Operation eine zweite Operation umfasst und K eine positive ganze Zahl nicht kleiner als 1 ist, und eine Datenverarbeitungsvorrichtung, auf die das Berechnungsverfahren angewandt wird, Folgendes umfasst:
eine erste Datenverarbeitungseinheit, ausgelegt zum M-maligen Ausführen der ersten Operation an einer eingegebenen ersten Matrix, um eine zweite Matrix zu erhalten, wobei M eine positive ganze Zahl nicht kleiner als 1 ist; und
eine zweite Datenverarbeitungseinheit, ausgelegt zum Ausführen der zweiten Operation an der zweiten Matrix; und
das Berechnungsverfahren Folgendes umfasst:
Steuern (1010) der ersten Datenverarbeitungseinheit zur Ausführung einer i-ten ersten Operation der M ersten Operationen an der ersten Matrix, um ein i-tes Datenelement der zweiten Matrix zu erhalten, wobei 1 ≤ i ≤ M ist;
Speichern (1020) des i-ten Datenelements der zweiten Matrix in einer ersten Speicherungseinheit;
Steuern (1030) der zweiten Datenverarbeitungseinheit zur Ausführung einer zweiten Operation unter Verwendung eines Pipeline-Steuermechanismus zwischen Schichten, wenn aktuell in der ersten Speicherungseinheit gespeicherte Datenelemente zum Ausführen einer zweiten Operation ausreichen, wobei
die erste Operation eine Faltungsoperation ist und die zweite Operation eine Faltungsoperation oder eine Pooling-Operation ist,
wobei das Verfahren ferner Folgendes umfasst: Steuern der ersten Speicherungseinheit zur Speicherung nur eines Teils von Zwischendaten, die zwischen der K-ten Neuronalnetzschicht und der (K+1)-ten Neuronalnetzschicht liegen;
wobei die Datenverarbeitungsvorrichtung die erste Speicherungseinheit umfasst, die erste Speicherungseinheit einen ersten Linienpuffer umfasst, der erste Linienpuffer N Register umfasst, die N Register in dem ersten Linienpuffer sequentiell Elemente einer dritten Matrix in Zeilenhauptreihenfolge oder Spaltenhauptreihenfolge speichern und die dritte Matrix eine Matrix ist, die erhalten wird, nachdem null Hinzufügung an der zweiten Matrix zur Ausführung der zweiten Operation an der zweiten Matrix ausgeführt wird, wobei N=(h-1)x(W+p)+w ist, h eine Anzahl von Zeilen eines der zweiten Operation entsprechenden Kerns repräsentiert, w eine Anzahl von Spalten des der zweiten Operation entsprechenden Kerns repräsentiert, W eine Anzahl von Spalten der zweiten Matrix repräsentiert, p eine Anzahl von Zeilen oder eine Anzahl von Spalten von Elementen 0, die zu der zweiten Matrix hinzugefügt werden müssen, um die zweite Operation an der zweiten Matrix auszuführen, repräsentiert und h, w, p, W und N alle positive ganze Zahlen nicht kleiner als 1 sind;
wobei die erste Datenverarbeitungseinheit eine Kreuzschiene ist und eine Größe eines Kerns der ersten Operation dieselbe wie die eines Kerns der zweiten Operation ist; die Datenverarbeitungsvorrichtung ferner eine zweite Speicherungseinheit umfasst, die zweite Speicherungseinheit einen zweiten Linienpuffer umfasst, der zweite Linienpuffer N Register umfasst, die N Register in dem zweiten Linienpuffer sequentiell Elemente einer vierten Matrix in Zeilenhauptreihenfolge oder Spaltenhauptreihenfolge speichern und die vierte Matrix eine Matrix ist, die erhalten wird, nachdem null Hinzufügung an der ersten Matrix zur Ausführung der ersten Operation an der ersten Matrix ausgeführt wird; und
wobei das Steuern der ersten Datenverarbeitungseinheit zur Ausführung einer i-ten ersten Operation der M ersten Operationen an der ersten Matrix Folgendes umfasst:
Steuern der ersten Datenverarbeitungseinheit in einem n-ten Taktzyklus zur Ausführung der i-ten ersten Operation an der ersten Matrix, um das i-te Datenelement der zweiten Matrix zu erhalten, wobei sich das i-te Datenelement der zweiten Matrix in einer letzten Spalte der zweiten Matrix befindet und sich ein (i+1)-tes Datenelement der zweiten Matrix an einem Startort einer Zeile neben einer Zeile befindet, in der sich das i-te Datenelement befindet; oder sich das i-te Datenelement der zweiten Matrix in einer letzten Zeile der zweiten Matrix befindet und sich ein (i+1)-tes Datenelement der zweiten Matrix an einem Startort einer Spalte neben einer Spalte befindet, in der sich das i-te Datenelement befindet;
Steuern der ersten Datenverarbeitungseinheit in einem (n+t)-ten Taktzyklus zur Ausführung einer (i+1)-ten ersten Operation der M ersten Operationen an der ersten Matrix, wobei t eine positive ganze Zahl größer als 1 ist; und
Steuern des ersten Linienpuffers in mindestens einem Taktzyklus eines (n+1)-ten Taktzyklus und des (n+t)-ten Taktzyklus zur Speicherung eines Elements 0.

5. Berechnungsverfahren nach Anspruch 4, wobei die zweite Datenverarbeitungseinheit eine Kreuzschiene ist, X Zielregister der N Register jeweils direkt mit X Zeilen der zweiten Datenverarbeitungseinheit verbunden sind und die X Zielregister ein [1+kx(W+p)]-tes Register bis zu einem [w+kx(W+p)]-ten Register der N Register sind, wobei ein Wert von k eine positive ganze Zahl im Bereich von 0 bis h-1 ist und X=hxw ist; und
das Speichern des i-ten Datenelements der zweiten Matrix in einer ersten Speicherungseinheit Folgendes umfasst:
Speichern des i-ten Datenelements der zweiten Matrix in dem ersten Linienpuffer; und
das Steuern der zweiten Datenverarbeitungseinheit zur Ausführung einer zweiten Operation, wenn aktuell in der ersten Speicherungseinheit gespeicherte Datenelemente zum Ausführen einer zweiten Operation ausreichen, Folgendes umfasst:
wenn aktuell in den X Zielregistern gespeicherte Datenelemente zur Ausführung einer zweiten Operation ausreichen, Steuern der zweiten Datenverarbeitungseinheit zur Operation dergestalt, dass eine zweite Operation an den in den X Zielregistern gespeicherten Datenelementen ausgeführt wird.

6. Berechnungsverfahren nach Anspruch 4 oder 5, wobei t=(s-1)x(W+p)+(w-1) ist und das Steuern des ersten Linienpuffers in mindestens einem Taktzyklus des (n+1)-ten Taktzyklus und des (n+t)-ten Taktzyklus zur Speicherung eines Elements 0 Folgendes umfasst:
Steuern des ersten Linienpuffers in dem (n+1)-ten Taktzyklus bis zum (n+t)-ten Taktzyklus zur sequentiellen Speicherung von (s-1)x(W+p)+(w-1) Elementen 0, wobei s einen Gleitschritt der ersten Operation repräsentiert.

## Revendications

1. Dispositif de calcul (300) pour le calcul de réseau neuronal, où le réseau neuronal comprend une K^{ème} couche de réseau neuronal et une (K+1)^{ème} couche de réseau neuronal, une opération exécutée par la K^{ème} couche de réseau neuronal comprend une première opération, une opération exécutée par la (K+1)^{ème} couche de réseau neuronal comprend une deuxième opération, et K est un entier positif non inférieur à 1 ; et
le dispositif de calcul comprend :
une première unité de calcul (310), configurée pour exécuter la première opération sur une première matrice d'entrée, M fois, pour obtenir une deuxième matrice, où M est un entier positif non inférieur à 1 ;
une deuxième unité de calcul (330), configurée pour effectuer la deuxième opération sur la deuxième matrice ; et
une unité de commande (340), configurée pour :
commander la première unité de calcul pour effectuer une i^{ème} première opération parmi les M premières opérations sur la première matrice, pour obtenir un i^{ème} élément de données de la deuxième matrice, où 1 ≤ i ≤ M ;
stocker le i^{ème} élément de données de la deuxième matrice dans une première unité de stockage (320) ;
commander, à l'aide d'un mécanisme de commande de pipeline inter-couches, si les éléments de données actuellement stockés dans la première unité de stockage sont suffisants pour effectuer une deuxième opération, à la deuxième unité de calcul d'effectuer une deuxième opération, où
la première opération est une opération de convolution et la deuxième opération est une opération de convolution ou une opération de mise en commun,
où la première unité de stockage est commandée pour stocker uniquement une partie des données intermédiaires qui sont entre la K^{ème} couche de réseau neuronal et la (K+1)^{ème} couche de réseau neuronal ;
où le dispositif de calcul comprend la première unité de stockage, la première unité de stockage comprend un premier tampon de ligne, le premier tampon de ligne comprend N registres, les N registres dans le premier tampon de ligne stockent séquentiellement des éléments d'une troisième matrice dans un ordre de type par ligne dominante ou de type par colonne dominante, et la troisième matrice est une matrice qui est obtenue après que l'addition de zéros a été effectuée sur la deuxième matrice pour effectuer la deuxième opération sur la deuxième matrice, où N = (h-1)^{∗}(W+p)+w, h représente une quantité de lignes d'un noyau correspondant à la deuxième opération, w représente une quantité de colonnes du noyau correspondant à la deuxième opération, W représente une quantité de colonnes de la deuxième matrice, p représente une quantité de lignes ou une quantité de colonnes d'éléments 0 qui doivent être ajoutés à la deuxième matrice pour effectuer la deuxième opération sur la deuxième matrice, et h, w, p, W et N sont tous des entiers positifs non inférieurs à 1 ;
la première unité de calcul est une barre transversale, et la taille d'un noyau de la première opération est la même que celle d'un noyau de la deuxième opération ; le dispositif de calcul comprend en outre une deuxième unité de stockage, la deuxième unité de stockage comprend un deuxième tampon de ligne, le deuxième tampon de ligne comprend N registres, les N registres dans le deuxième tampon de ligne stockent séquentiellement des éléments d'une quatrième matrice dans un ordre par ligne dominante ou un ordre par colonne dominante, et la quatrième matrice est une matrice qui est obtenue après qu'une addition de zéros a été effectuée sur la première matrice pour effectuer la première opération sur la première matrice ;
où l'unité de commande est spécifiquement configurée pour :
commander, dans un n^{ième} cycle d'horloge, la première unité de calcul pour effectuer la i^{ème} première opération sur la première matrice, pour obtenir le i^{ème} élément de données de la deuxième matrice, où le i^{ème} élément de données de la deuxième matrice est situé dans une dernière colonne de la deuxième matrice, et un (i+1)^{ème} élément de données de la deuxième matrice est situé à un emplacement de départ d'une ligne à côté d'une ligne dans laquelle le i^{ème} élément de données est situé ; ou le i^{ème} élément de données de la deuxième matrice est situé dans une dernière ligne de la deuxième matrice, et un (i+1)^{ème} élément de données de la deuxième matrice est situé à un emplacement de départ d'une colonne à côté d'une colonne dans laquelle le i^{ème} élément de données est situé ;
commander, dans un (n+t)^{ème} cycle d'horloge, la première unité de calcul pour effectuer une (i+1)^{ème} première opération des M premières opérations sur la première matrice, où t est un entier positif supérieur à 1 ; et
commander, dans au moins un cycle d'horloge d'un (n+1)^{ème} cycle d'horloge et du (n+t)^{ème} cycle d'horloge, le premier tampon de ligne pour stocker un élément 0.

2. Dispositif de calcul selon la revendication 1, dans lequel la deuxième unité de calcul est une barre transversale, X registres cibles des N registres sont directement connectés à X lignes de la deuxième unité de calcul, respectivement, et les X registres cibles sont des registres du [1+k^{∗}(W+p)]^{ème} registre au [w+k^{∗}(W+p)]^{ème} registre des N registres, où une valeur de k est un entier positif compris entre 0 et h-1, et X = h*w ; et
l'unité de commande est spécifiquement configurée pour :
stocker le i^{ème} élément de données de la deuxième matrice dans le premier tampon de ligne ; et
si les éléments de données actuellement stockés dans les X registres cibles sont suffisants pour effectuer une deuxième opération, commander la deuxième unité de calcul pour qu'elle fonctionne, de manière à effectuer une deuxième opération sur les éléments de données stockés dans les X registres cibles.

3. Dispositif de calcul selon la revendication 1 ou 2, dans lequel t = (s-1)*(W+p)+(w-1), et
l'unité de commande est spécifiquement configurée pour :
commander, du (n+1)^{ème} cycle d'horloge au (n+t)^{ème} cycle d'horloge, le premier tampon de ligne pour stocker séquentiellement (s-1)*(W+p)+(w-1) éléments 0, où s représente un pas de glissement de la première opération.

4. Procédé de calcul pour le calcul de réseau neuronal, où le réseau neuronal comprend une K^{ème} couche de réseau neuronal et une (K+1)^{ème} couche de réseau neuronal, une opération exécutée par la K^{ème} couche de réseau neuronal comprend une première opération, une opération exécutée par la (K+1)^{ème} couche de réseau neuronal comprend une deuxième opération, et K est un entier positif non inférieur à 1, et un dispositif de calcul auquel le procédé de calcul est appliqué comprend :
une première unité de calcul, configurée pour exécuter la première opération sur une première matrice d'entrée, M fois, pour obtenir une deuxième matrice, où M est un nombre entier positif non inférieur à 1 ; et
une deuxième unité de calcul, configurée pour effectuer la deuxième opération sur la deuxième matrice ; et
le procédé de calcul comprend:
commander (1010) la première unité de calcul pour effectuer une i^{ème} première opération parmi les M premières opérations sur la première matrice, pour obtenir un i^{ème} élément de données de la deuxième matrice, où 1 ≤ i ≤ M ;
stocker (1020) le i^{ème} élément de données de la deuxième matrice dans une première unité de stockage ; et
commander (1030), à l'aide d'un mécanisme de commande de pipeline inter-couches, si des éléments de données actuellement stockés dans la première unité de stockage sont suffisants pour exécuter une deuxième opération, à la deuxième unité de calcul d'effectuer une deuxième opération, où :
la première opération est une opération de convolution et la deuxième opération est une opération de convolution ou une opération de mise en commun,
où le procédé comprend en outre de commander la première unité de stockage pour stocker uniquement une partie des données intermédiaires qui sont entre la K^{ème} couche de réseau neuronal et la (K+1)^{ème} couche de réseau neuronal ;
le dispositif de calcul comprend la première unité de stockage, la première unité de stockage comprend un premier tampon de ligne, le premier tampon de ligne comprend N registres, les N registres dans le premier tampon de ligne stockent séquentiellement des éléments d'une troisième matrice dans un ordre de type par ligne dominante ou de type par colonne dominante, et la troisième matrice est une matrice qui est obtenue après que l'addition de zéros a été effectuée sur la deuxième matrice pour effectuer la deuxième opération sur la deuxième matrice, où N = (h-1)^{∗}(W+p)+w, h représente une quantité de lignes d'un noyau correspondant à la deuxième opération, w représente une quantité de colonnes du noyau correspondant à la deuxième opération, W représente une quantité de colonnes de la deuxième matrice, p représente une quantité de lignes ou une quantité de colonnes d'éléments 0 qui doivent être ajoutés à la deuxième matrice pour effectuer la deuxième opération sur la deuxième matrice, et h, w, p, W et N sont tous des entiers positifs non inférieurs à 1 ;
où la première unité de calcul est une barre transversale, et la taille d'un noyau de la première opération est la même que celle d'un noyau de la deuxième opération ; le dispositif de calcul comprend en outre une deuxième unité de stockage, la deuxième unité de stockage comprend un deuxième tampon de ligne, le deuxième tampon de ligne comprend N registres, les N registres dans le deuxième tampon de ligne stockent séquentiellement des éléments d'une quatrième matrice dans un ordre par ligne dominante ou un ordre par colonne dominante, et la quatrième matrice est une matrice qui est obtenue après qu'une addition de zéros a été effectuée sur la première matrice pour effectuer la première opération sur la première matrice ; et
où la commande de la première unité de calcul pour effectuer une i^{ème} première opération des M premières opérations sur la première matrice comprend :
commander, dans un n^{ième} cycle d'horloge, la première unité de calcul pour effectuer la i^{ème} première opération sur la première matrice, pour obtenir le i^{ème} élément de données de la deuxième matrice, où le i^{ème} élément de données de la deuxième matrice est situé dans une dernière colonne de la deuxième matrice, et un (i+1)^{ème} élément de données de la deuxième matrice est situé à un emplacement de départ d'une ligne à côté d'une ligne dans laquelle le i^{ème} élément de données est situé ; ou le i^{ème} élément de données de la deuxième matrice est situé dans une dernière ligne de la deuxième matrice, et un (i+1)^{ème} élément de données de la deuxième matrice est situé à un emplacement de départ d'une colonne à côté d'une colonne dans laquelle le i^{ème} élément de données est situé ;
commander, dans un (n+t)^{ème} cycle d'horloge, la première unité de calcul pour effectuer une (i+1)^{ème} première opération des M premières opérations sur la première matrice, où t est un entier positif supérieur à 1 ; et
commander, dans au moins un cycle d'horloge d'un (n+1)^{ème} cycle d'horloge et du (n+t)^{ème} cycle d'horloge, le premier tampon de ligne pour stocker un élément 0.

5. Procédé de calcul selon la revendication 4, dans lequel la deuxième unité de calcul est une barre transversale, X registres cibles des N registres sont directement connectés à X lignes de la deuxième unité de calcul, respectivement, et les X registres cibles sont des registres du [1+k^{∗}(W+p)]^{ème} registre au [w+k^{∗}(W+p)]^{ème} registre des N registres, où une valeur de k est un entier positif compris entre 0 et h-1, et X = h*w ; et
le stockage du i^{ème} élément de données de la deuxième matrice dans une première unité de stockage comprend :
stocker le i^{ème} élément de données de la deuxième matrice dans le premier tampon de ligne ; et
la commande, si les éléments de données actuellement stockés dans la première unité de stockage sont suffisants pour exécuter une deuxième opération, de la deuxième unité de calcul pour exécuter une deuxième opération comprend :
si les éléments de données actuellement stockés dans les X registres cibles sont suffisants pour effectuer une deuxième opération, commander la deuxième unité de calcul pour qu'elle fonctionne, de manière à effectuer une deuxième opération sur les éléments de données stockés dans les X registres cibles.

6. Procédé de calcul selon la revendication 4 ou la revendication 5, dans lequel t = (s-1)*(W+p)+(w-1), et
la commande, dans au moins un cycle d'horloge du (n+1)^{ème} cycle d'horloge et du (n+t)^{ème} cycle d'horloge, du premier tampon de ligne pour stocker un élément 0 comprend :
commander, du (n+1)^{ème} cycle d'horloge au (n+t)^{ème} cycle d'horloge, le premier tampon de ligne pour stocker séquentiellement (s-1)*(W+p)+(w-1) éléments 0, où s représente une étape de glissement de la première opération.
